# EUROPEAN PATENT APPLICATION

(11) **EP 4 841 822 A1**
(43) Date of publication of application: **18.11.2026**
(21) Application number: 25175705.0
(22) Date of filing: 12.05.2025
(51) Int. Cl.: H01Q 1/00, H01Q 1/12, H01Q 1/44, E06B 9/24, H01Q 1/32, H01Q 3/26, H01Q 21/06, H01Q 21/28

(54) **LIGHT MODULATOR ARRANGED FOR RF RECEPTION AND/OR TRANSMISSION**

(71) Applicant: eLstar Dynamics Patents B.V., 3235 CD Rockanje (NL)
(72) Inventor: SLACK, Anthony John, 83510 Lorgues (FR); THOMAS, David Richard, 06650 Opio (FR)
(74) Representative: DeltaPatents B.V.

(57) **Abstract**

Some embodiments are directed to a light modulator (100) configured for reception and/or transmission of radio frequency signals. A plurality of regions is defined on a first substrate of the light modulator, wherein in each region a first electrode is arranged on the first substrate. The first electrode is connected to the first driving bus through a low-pass element, for modulation of optical properties of an optical layer of the light modulator. The first electrode is connected through a high-pass element to a corresponding phase shifter of a plurality of phase shifters, wherein the first electrode is adapted to serve as an antenna. The light modulator is configured to combine output signals of the plurality of phase shifters into a combined RF output signal, and/or wherein an RF input signal is provided to the plurality of phase shifters.

## Description

### TECHNICAL FIELD

The presently disclosed subject matter relates to a light modulator, a glazing unit, a substrate, a light modulator method, a light modulator configuration method, and a computer readable medium.

### BACKGROUND

Optically active glazing is known in the art. Typically, an optically active glazing system comprises two parallel plates, made from a transparent dielectric material such as glass or a plastic material. The internal volume defined between the plates may be subdivided into a plurality of small independent volumes or individual cells that are filled with a dielectric fluid. The fluid contains a suspension of particles of a dielectric, charged or chargeable material. The facing sides of the two plates carry electrodes facing each other. The electrodes are connected to an electrical power supply associated with a control means.

The electrodes of each plate are formed by combs that are interleaved into one another in pairs. The electrodes of two interleaved combs are capable of taking up electrical voltages of polarities that are identical or opposite. With a suitable voltage on the electrodes the particles can be concentrated at different locations between the electrodes to give the system either a transparent or an opaque appearance.

A known system for optically active glazing is described in WO 2022/029018 A1, which is included herein by reference.

### SUMMARY

A light modulator is provided which is configured for reception and/or transmission of radio frequency signals.

The light modulator may comprise a first substrate and a second substrate, arranged parallel to each other in the light modulator, a first driving bus being arranged on the first substrate.

The light modulator may comprise a plurality of regions being defined on the first substrate, wherein in each region a first electrode is arranged on the first substrate, which first electrode is connected to the first driving bus through a low-pass element, the first electrode of each region of the plurality of regions is connected through a high-pass element to a corresponding RF signal processing element of a plurality of RF signal processing elements, wherein the first electrode is adapted to serve as an antenna.

Accordingly, the RF antenna may comprise a number of separately controllable elements. This may be used by the light modulator to control the direction of maximum receiver gain and/or transmitter gain, the elements may also be used to control an optical property of the light modulator.

The light modulator may comprise an optical layer arranged between the first substrate and second substrate, charged or chargeable particles being in fluidic suspension in the optical layer, the first driving bus being configured to receive a low-frequency driving signal, which is applied to the first electrodes via the low-pass elements, thereby generating an electric field in the optical layer that induces electric modulation of the particles' position, causing modulation of optical properties of the light modulator.

Electric modulation of the particles' position may be electrophoretic modulation and/or dielectrophoretic modulation. Electrophoretic movement comprises the displacement of charged particles suspended in a fluid under the influence of a low-frequency electric field, whereby the particles migrate along the field lines toward the electrode of opposite charge. Preferably the fluid is a dielectric fluid, e.g., a dielectric liquid. Dielectrophoretic movement comprises the motion of polarizable but electrically neutral particles in response to a non-uniform electric field, typically generated by an alternating current (AC) signal, resulting in translational forces that drive the particles toward regions of higher or lower field intensity. Typical frequencies for electrophoretic modulation are in the range of 1 Hz to a few kHz, while dielectrophoretic modulation typically employs frequencies ranging from 10 kHz up to several MHz, depending on the particle and fluid properties.

The light modulator may be configured for reception and/or transmission of radio frequency signals through the plurality of RF signal processing elements.

For example, the RF signal processing elements may comprise phase shifters, and the light modulator may be configured to combine output signals of the plurality of phase shifters into a combined RF output signal, and/or wherein an RF input signal is provided to the plurality of phase shifters.

For example, the RF signal processing elements may comprise amplifiers, and the light modulator may be configured for multiple-input multiple-output (MIMO) operation.

A light modulator method is provided for reception and/or transmission of radio frequency signals using a light modulator. The light modulator may be according to an embodiment.

The method may comprise providing a low-frequency driving signal to the first driving bus to control the optical layer, the light modulator being configured to apply the low-frequency driving signal to the first electrodes via the low-pass elements, thereby generating an electric field in the optical layer that induces electric, e.g., electrophoretic or dielectrophoretic, modulation of the particles' position, causing modulation of optical properties of the light modulator.

Interestingly, an AC low-frequency signal may be applied to the electrodes to generate an electric field capable of modulating the position of the charged particles within the optical layer and controlling the optical property of the light modulator without disturbing the operation of the RF circuitry. This may be used both with electrophoretic and dielectrophoretic modulation, although for electrophoretic modulation a lower cutoff frequency may be used.

The method may comprise reception and/or transmission of radio frequency signals through the plurality of RF signal processing elements.

In an embodiment, RF signals are transmitted and/or received from the antenna comprising the first electrodes and optionally second electrodes, whilst the light modulator is controlled by two or more of the same electrodes using low frequency control signals.

The method may comprise combining output signals of the plurality of phase shifters into a combined RF output signal, and/or providing an RF input signal to the plurality of phase shifters.

A light modulator configuration method is provided.

The method may comprise providing a light modulator according to an embodiment, wherein the RF processing elements comprise a phase shifter and/or gain controlled amplifiers.

The method may comprise optimizing phase shifts for the plurality of phase shifters of the light modulator to optimize RF reception and/or RF transmission.

The method may comprise programming the plurality of phase shifters and/or gains of the amplifiers of the light modulator through the computer, setting for each phase shifter the particular phase shift obtained from the optimization of the reception of RF power.

A method is provided for determining the direction of maximum gain of an RF receiving array of a light modulator, the method comprising performing ray tracing simulations prior to installation of the light modulator within a glazing unit, the simulations being configured to identify the direction of maximum received RF energy at a target location. The method may take the orientation of the glazing unit within a designated building structure as an input or may compute an optimized orientation of the glazing unit within a designated building structure as an output. The optimized orientation may be subject to constraints.

A method is provided for determining the direction of maximum gain of an RF receiving array of a light modulator, the method comprising measuring received RF signal power with the light modulator installed in situ within a building, and determining from said measurements an optimized direction of maximum gain based on the actual environment in which the light modulator is deployed.

A method is provided for optimizing the direction of maximum gain of an RF receiving array of a light modulator, the method comprising applying phase shift values to each antenna element of the array, the phase shift values being selected to maximize received signal power from a target direction, thereby aligning the direction of maximum gain with the incident RF signal.

A method is provided for modulating an optical property of a light modulator configured for RF signal reception and/or transmission, the method comprising applying an alternating current low-frequency signal to one or more of a first electrode and a second electrode of the light modulator, the signal being configured to generate an electric field in an optical layer arranged between the electrodes, the field inducing motion of charged particles within the optical layer while leaving the operation of the RF circuitry unaffected or substantially unaffected.

The light modulator is an electronic device.

An embodiment of a method according to an embodiment may be implemented on a computer as a computer-implemented method, in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer-readable medium for performing an embodiment of the method when said program product is executed on a computer. For example, a computer-readable medium may be a computer-readable storage medium.

In an embodiment, the computer program comprises computer program code adapted to perform all or part of the steps of an embodiment of the method when the computer program is run on a computer. Preferably, the computer program is embodied on a computer-readable medium.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

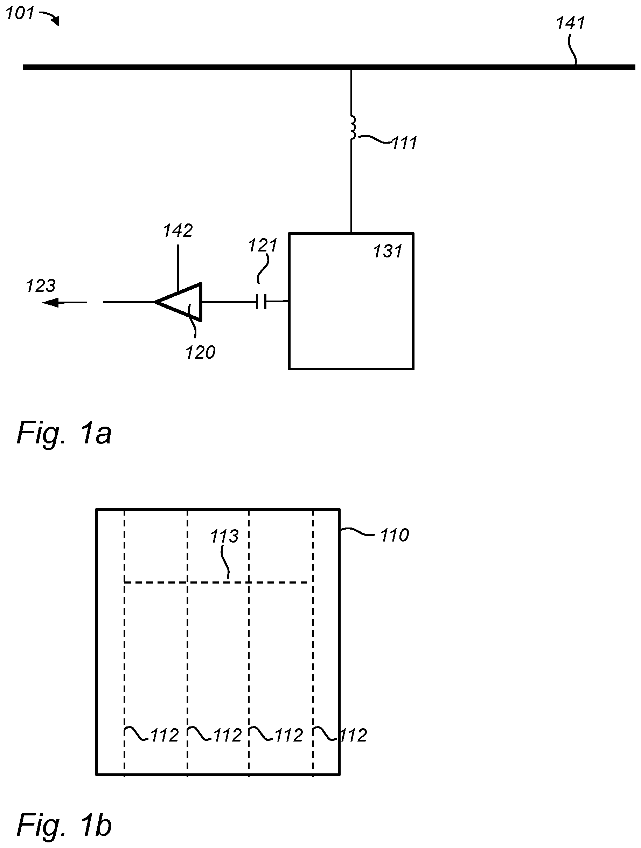

Figure 1a schematically shows an example of an embodiment of a light modulator,
Figure 1b schematically shows an example of an embodiment of a building block,

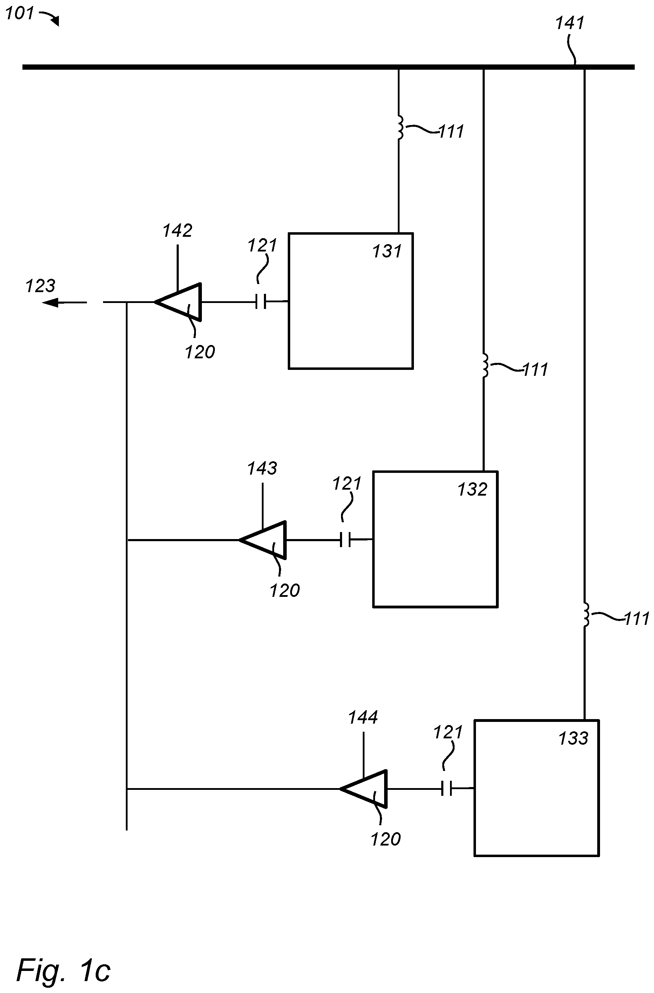

Figure 1c schematically shows an example of an embodiment of a light modulator,

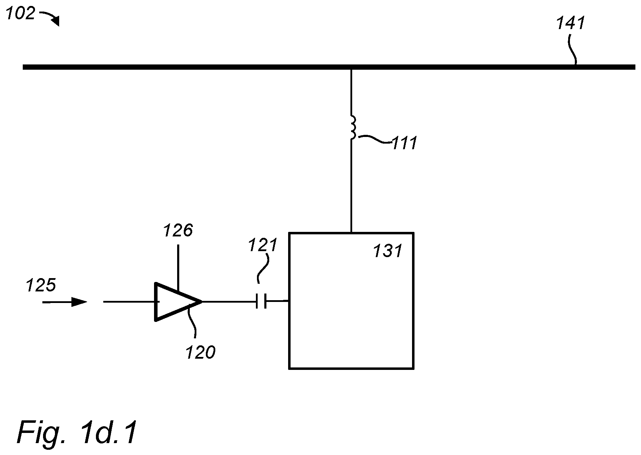

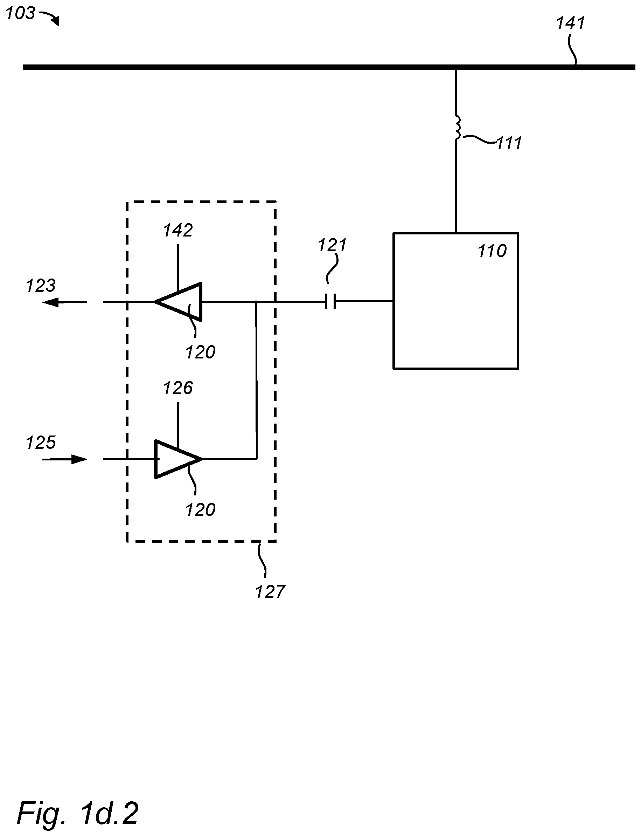

Figure 1d.1 schematically shows an example of an embodiment of a light modulator,
Figure 1d.2 schematically shows an example of an embodiment of a light modulator,
Figure 1e schematically shows an example of an embodiment of a light modulator,
Figure 1f schematically shows an example of an embodiment of a glazing unit,
Figure 2a schematically shows an example of an embodiment of a light modulator,
Figure 2b schematically shows an example of an embodiment of a building block,
Figure 2c schematically shows an example of an embodiment of a light modulator,
Figure 2d schematically shows an example of an embodiment of a light modulator,
Figure 2e schematically shows an example of an embodiment of a light modulator,
Figure 2f schematically shows an example of an embodiment of a light modulator,
Figure 3a.1 schematically shows an example of an embodiment of a light modulator,

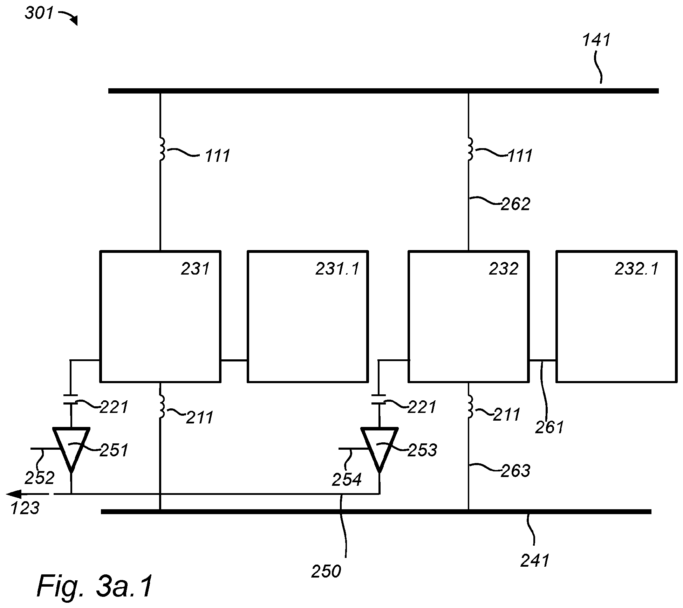

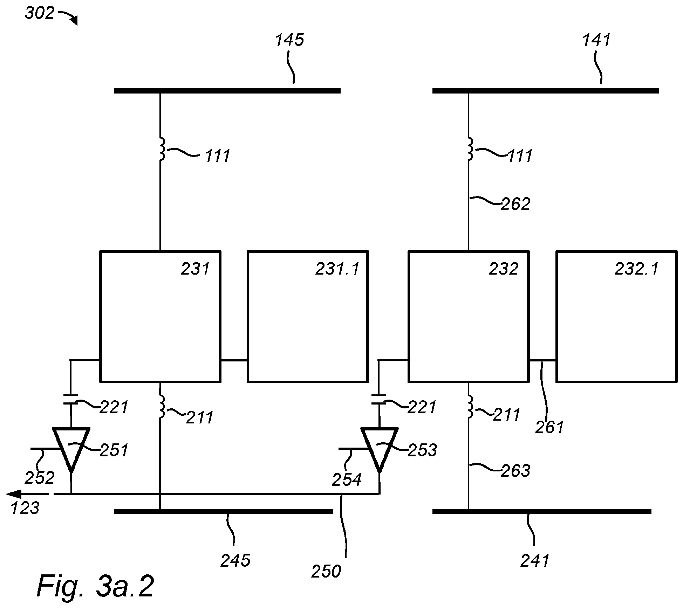

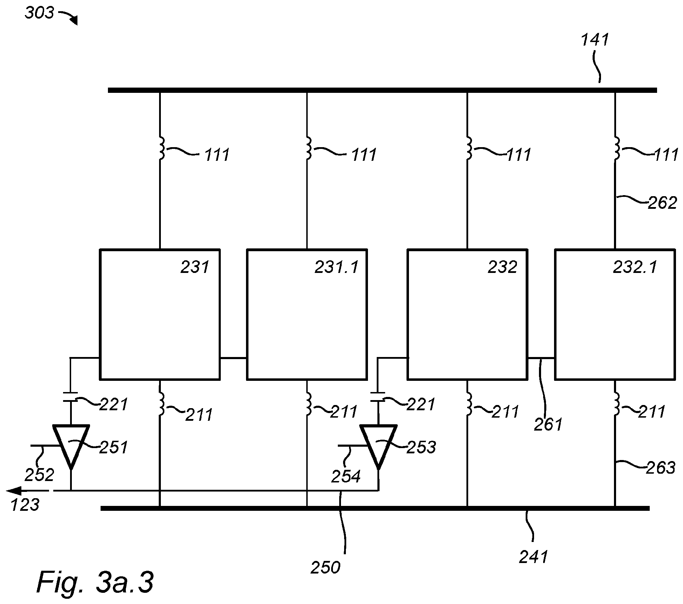

Figure 3a.2 schematically shows an example of an embodiment of a light modulator,
Figure 3a.3 schematically shows an example of an embodiment of a light modulator,

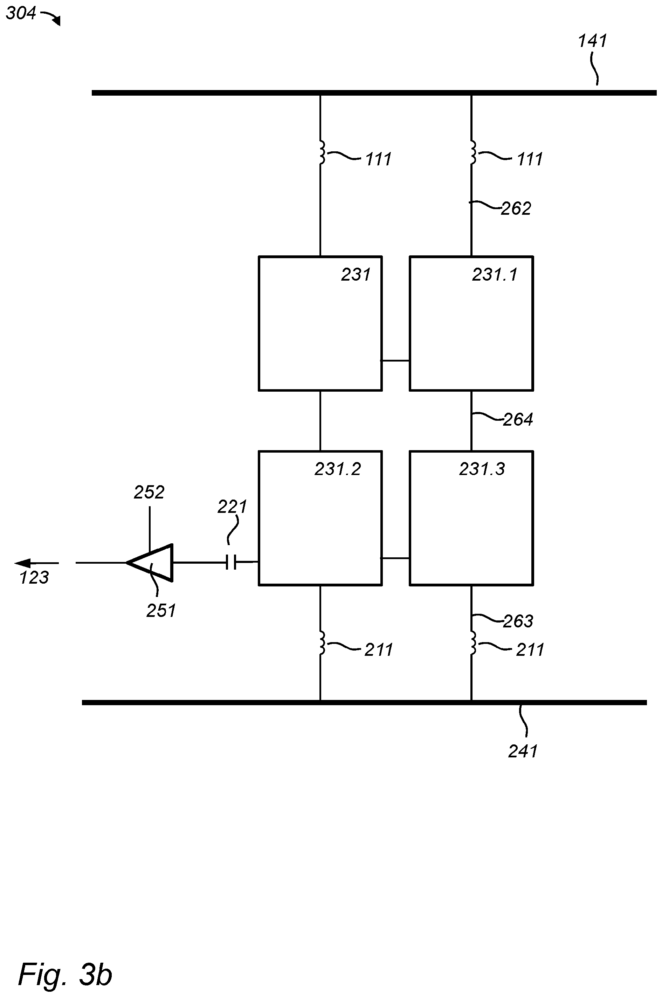

Figure 3b schematically shows an example of an embodiment of a light modulator,

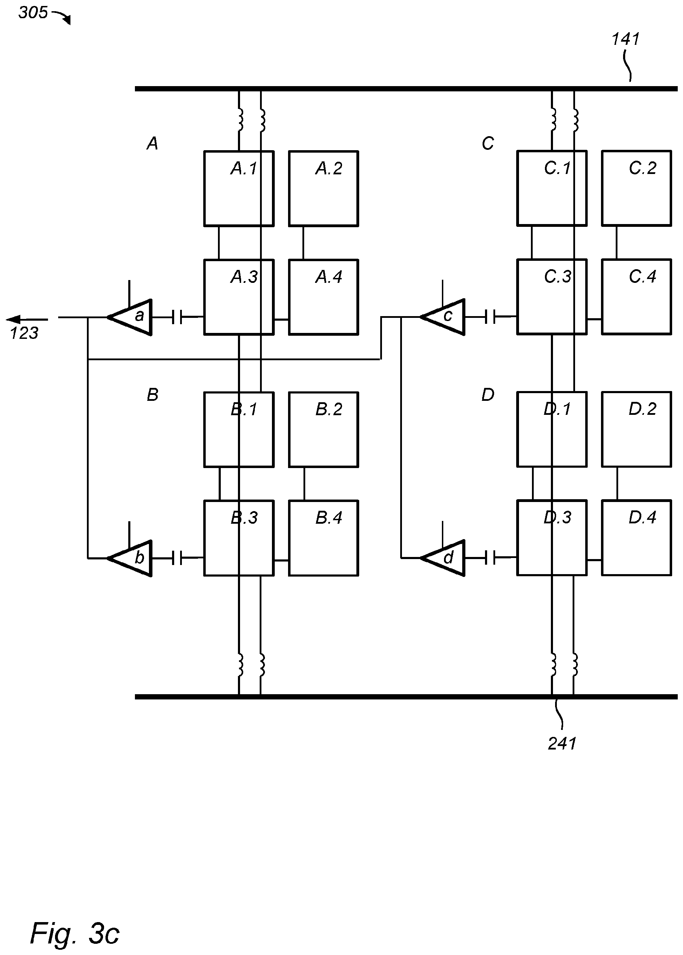

Figure 3c schematically shows an example of an embodiment of a light modulator,

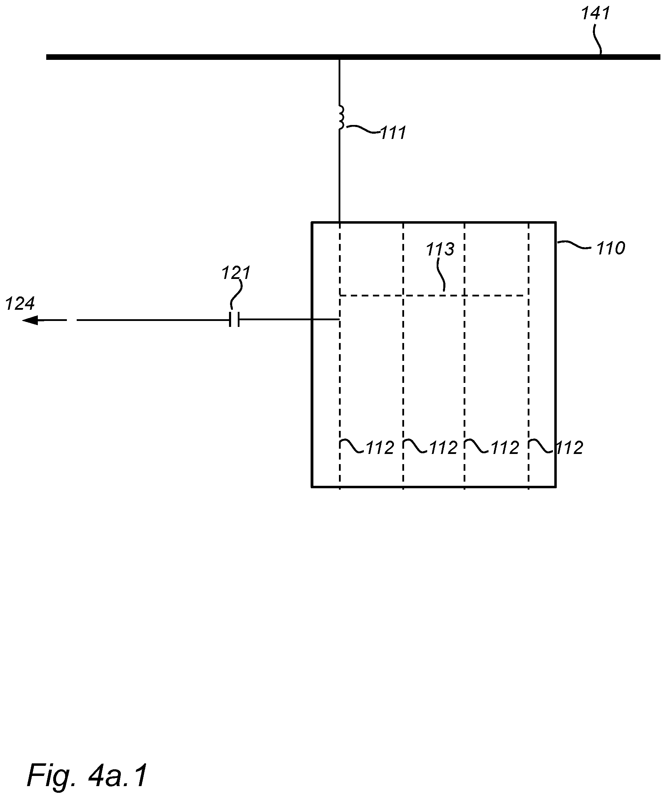

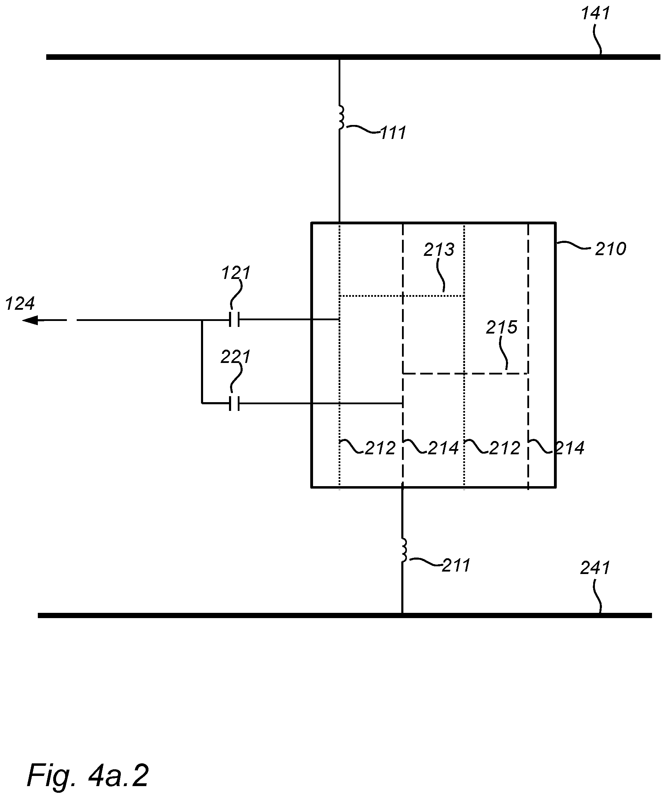

Figure 4a.1 schematically shows an example of an embodiment of a light modulator,
Figure 4a.2 schematically shows an example of an embodiment of a light modulator,

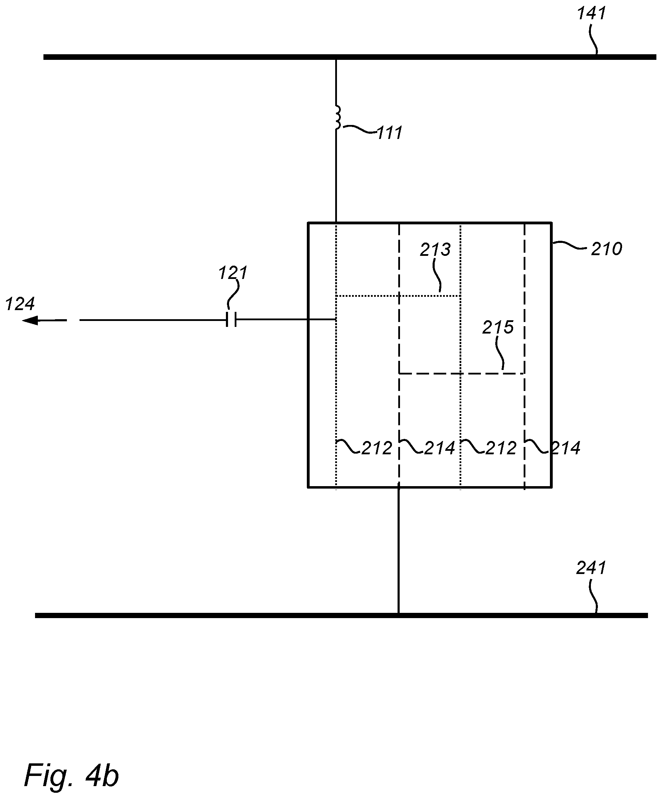

Figure 4b schematically shows an example of an embodiment of a light modulator,

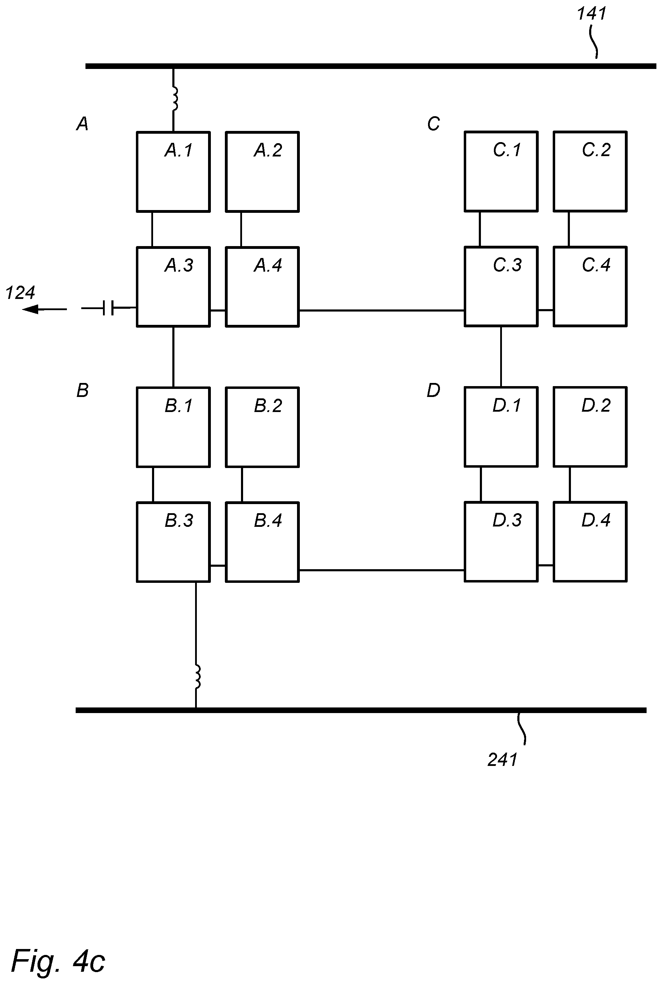

Figure 4c schematically shows an example of an embodiment of a light modulator,

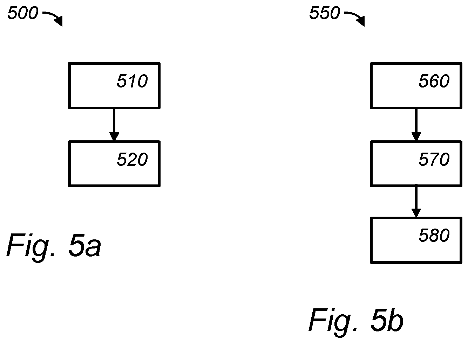

Figure 5a schematically shows an example of an embodiment of a light modulator method,
Figure 5b schematically shows an example of an embodiment of a method of configuring a light modulator,

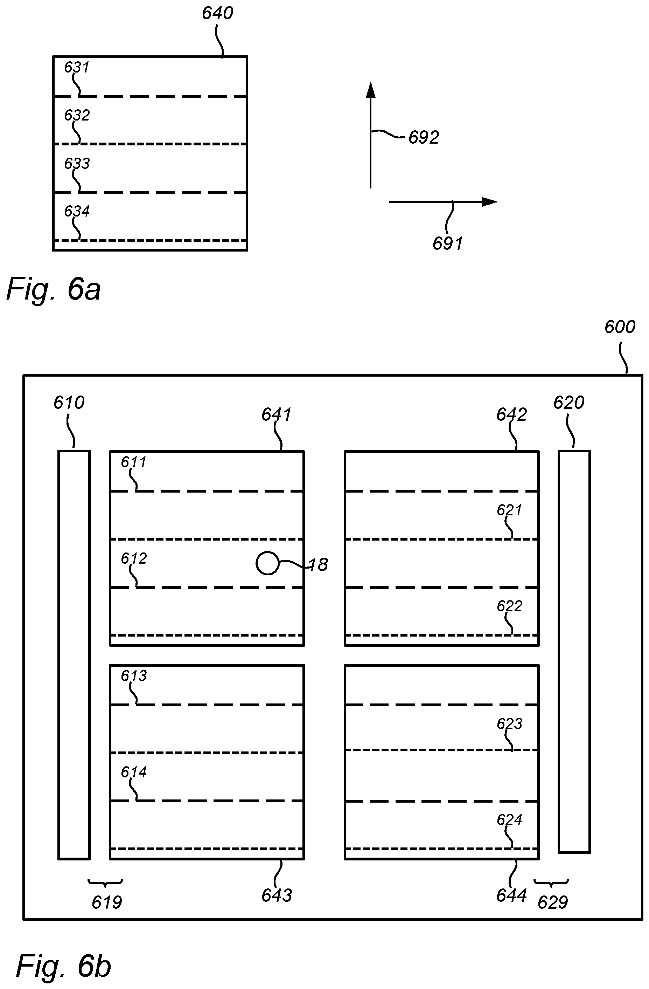

Figure 6a schematically shows an example of an embodiment of a building block,
Figure 6b schematically shows an example of an embodiment of a substrate,

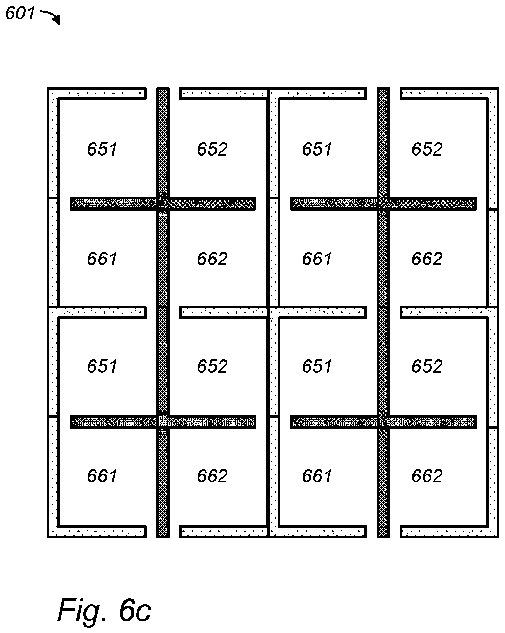

Figure 6c schematically shows an example of an embodiment of a substrate,

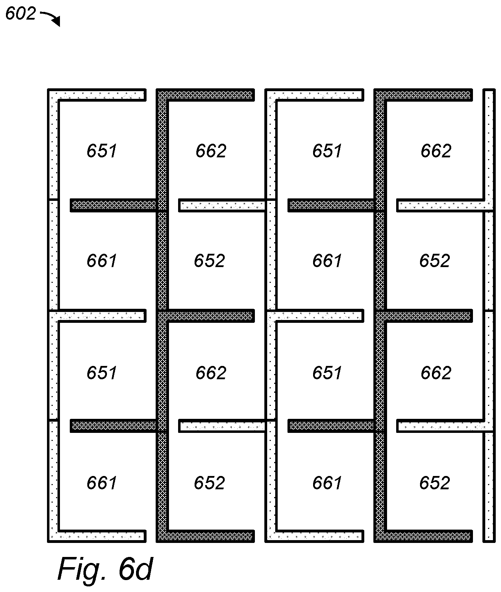

Figure 6d schematically shows an example of an embodiment of a substrate,

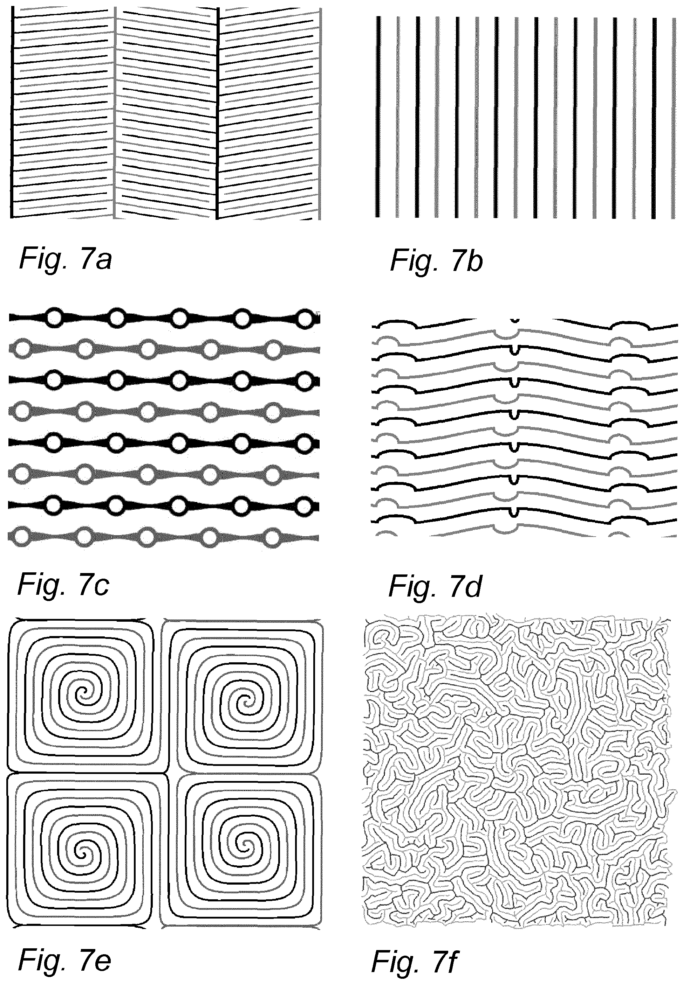

Figures 7a-7f schematically show an example of an embodiment of a building block,

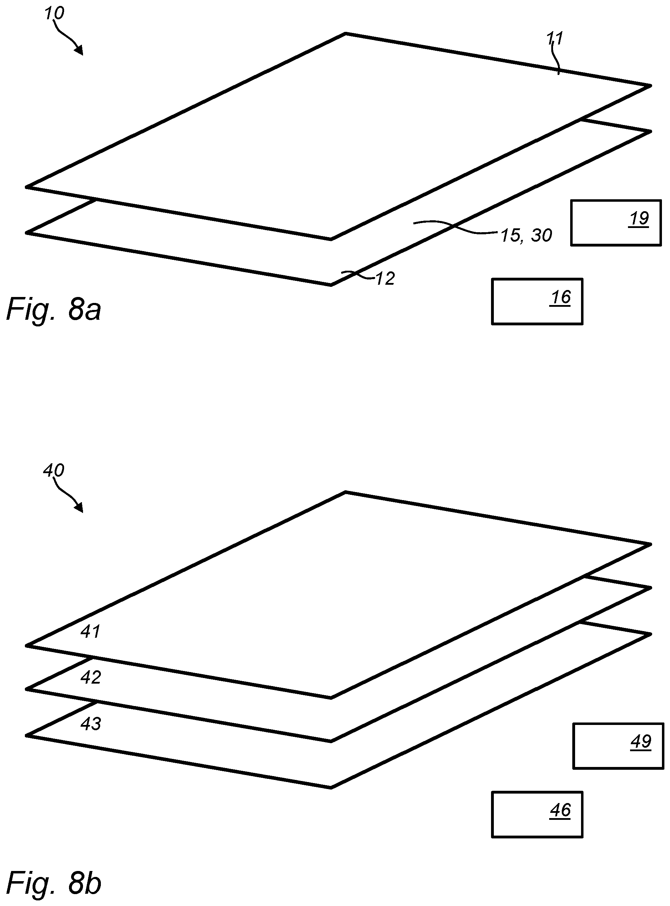

Figure 8a schematically shows an example of an embodiment of a light modulator,
Figure 8b schematically shows an example of an embodiment of a light modulator,

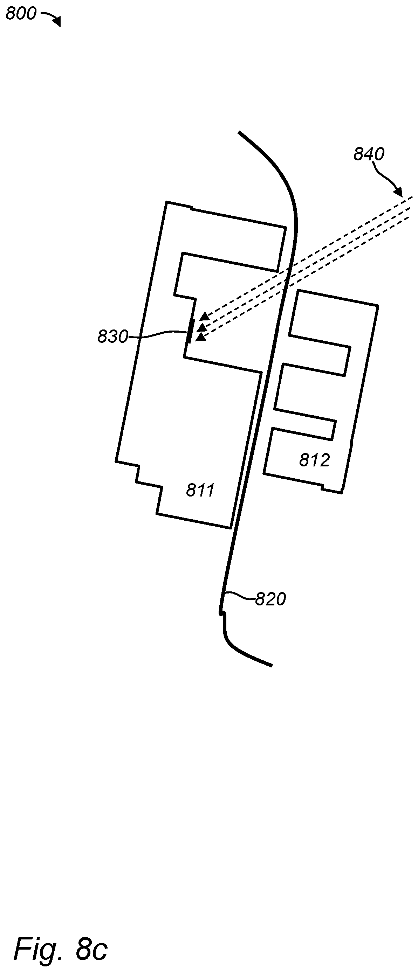

Figure 8c schematically shows an example of an embodiment of a building,

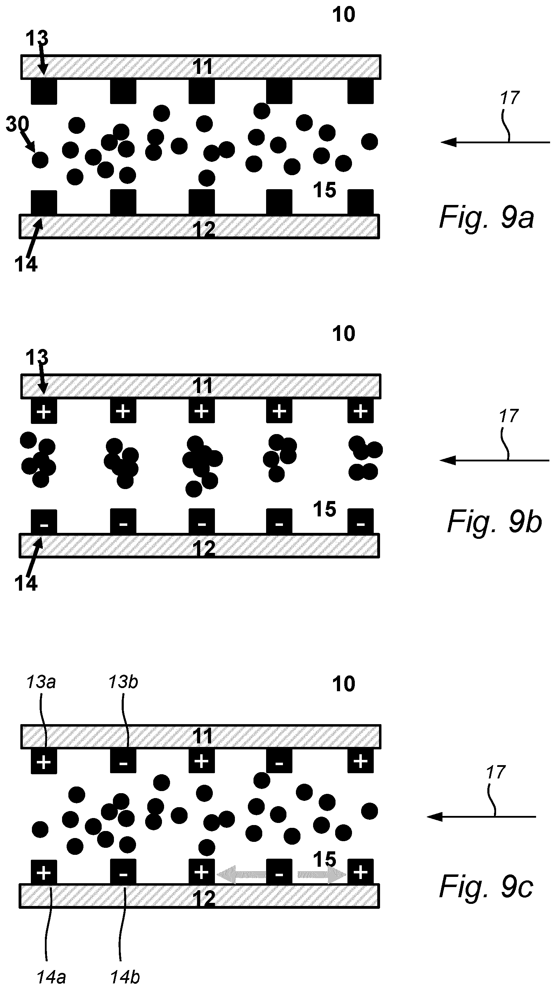

Figures 9a-9c schematically show an embodiment of a light modulator.

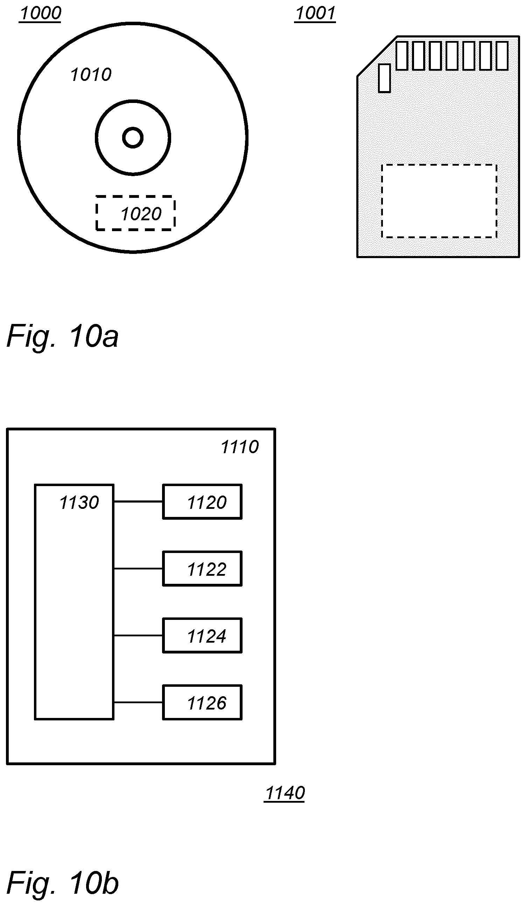

Figure 10a schematically shows a computer-readable medium having a writable part comprising a computer program according to an embodiment,
Figure 10b schematically shows a representation of a processor system according to an embodiment.

### Reference signs list

The following list of references and abbreviations corresponds to the figures, and is provided for facilitating the interpretation of the drawings and shall not be construed as limiting the claims.
- 101-104: light modulator
- 110: a building block
- 111: a low-pass element
- 112: a main line
- 113: a cross connection
- 120: a phase shifter
- 121: a high-pass element
- 123: a combined output signal
- 125: an input signal
- 126: a phase shift input
- 127: a switch
- 128: an amplifier
- 129.1 - 129.3: an RF output signal

- 131-133: a region
- 141: driving bus
- 142-144: a phase shift input

- 105: glazing unit
- 151: interdigitated electrodes for light modulation
- 152: interdigitated electrodes for light modulation
- 153: connection for electrodes
- 154: connection for electrodes
- 161: first substrate
- 162: second substrate
- 163: optical layer comprising charged particles for light modulation
- 164: isolating layer
- 165: glass pane
- 166: glass pane
- 171: building exterior
- 172: building interior
- 160: controller
- 190: energy storage
- 191: a MIMO processor

- 201-205: a light modulator
- 210: a building block
- 212, 214: a main line
- 213,215: a cross connection
- 211: a low-pass element
- 221: a high-pass element
- 241: driving bus
- 231-233: a region
- 251-255: a phase shifter
- 252-256: a phase shift input
- 250: a connecting line
- 301-305: a light modulator
- 231, 231.1: a building block
- 232, 232.1: a building block
- 262, 263: a connection from a building block to a driving bus
- 261, 264: a connection between building blocks
- 231.2, 231.3: a building block
- 145, 245: a driving bus
- A.1-A.4: a building block
- B.1-B.4: a building block
- C.1-C.4: a building block
- D.1-D.4: a building block
- a-d: a phase shifter
- 124: a ground signal

- 600-602: a substrate
- 611-614: a main line
- 621-624: a main line
- 631-634: interdigitated electrodes
- 640: a building block
- 641-644: a building block
- 610, 620: a driving bus
- 619, 629: a connecting zone
- 691, 692: a direction
- 651, 652, 661,662: a building block

- 10: a light modulator
- 11: a first substrate
- 12: a second substrate
- 15: a fluid
- 16: a controller
- 19: an energy storage
- 30: particles
- 40: a light modulator
- 41: a first substrate
- 42: a second substrate
- 43: a third substrate
- 46: a controller
- 49: an energy storage
- 13, 13a, 13b: electrodes
- 14, 14a, 14b: electrodes
- 17: an optical layer

- 800: a map
- 811: a first building
- 812: a second building
- 820: a road
- 830: a glazing unit
- 840: radiation

### DESCRIPTION OF EMBODIMENTS

While the presently disclosed subject matter is susceptible to embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only but also includes every other combination of features described herein or recited in mutually different dependent claims.

In an embodiment, light modulator is provided that not only modulates its optical properties, but is also configured reception and/or transmission of radio frequency signals. The light modulation part uses one or more electrodes on one or more substrates. Electric fields induced by said electrodes modulate the location of particles in an optical layer between the substrates. As a result, the optical properties of the light modulator changes. For example, the light modulator may become more or less transparent, or more or less reflective. Interestingly, the same electrodes can be used for RF reception or RF transmission, including as a phased array and/or MIMO arrangement.

The light modulator may comprise
- a first substrate and a second substrate, arranged parallel to each other in the light modulator, a first driving bus being arranged on the first substrate,
- a plurality of regions being defined on the first substrate, wherein in each region a first electrode is arranged on the first substrate, which first electrode is connected to the first driving bus through a low-pass element, the first electrode of each region of the plurality of regions is connected through a high-pass element to a corresponding RF signal processing element of a plurality of RF signal processing elements, wherein the first electrode is adapted to serve as an antenna,
- an optical layer arranged between the first substrate and second substrate, charged or chargeable particles being in fluidic suspension in the optical layer (143), the first driving bus being configured to receive a low-frequency driving signal, which is applied to the first electrodes via the low-pass elements, thereby generating an electric field in the optical layer that induces electric modulation of the particles' position, causing modulation of light passing through the light modulator, wherein
- the light modulator is configured for reception and/or transmission of radio frequency signals through the plurality of RF signal processing elements.

Modulation of the particles' position may be electrophoretic and/or dielectrophoretic modulation.

The RF signal processing elements may each comprise a phase shifter. In this case, a phased array antenna arrangement can be achieved. This allows for electronic beam steering without mechanical movement, enabling rapid directional control and enhanced signal gain in specific directions.

Alternatively, the RF signal processing elements may each comprise an amplifier. In this case, a MIMO antenna arrangement can be achieved. This allows for increased channel capacity through spatial multiplexing, resulting in higher data throughput and improved spectral efficiency in multipath environments.

In an embodiment, the RF signal processing element may be configured both for phase shifting and for amplification.

Embodiments herein will mostly use phase shifters as a motivating example. However, embodiments featuring phase shifters may be adapted for MIMO by replacing the phase shifters with RF signal processing elements adapted for MIMO, and by replacing a common RF output signal with individual RF output signal per region, which are processed by a MIMO processor.

**Figure 1a** schematically shows an example of an embodiment of a light modulator 101. Light modulator 101 is configured for electrically modulating its optical properties. Interestingly, light modulator 101 is also configured for reception and/or transmission of radio frequency signals. At least some of the electrodes used to modulate the optical properties in light modulator 101 have a dual purpose in that they also function as an antenna for the reception and/or transmission of radio frequency signals.

Figure 1a shows part of a first substrate of light modulator 101. The light modulator comprises the first substrate and at least a second substrate, arranged parallel to each other in the light modulator. The second substrate is not shown in figure 1a, though examples of a light modulator with multiple substrates are shown in various other figures, e.g., 1f, 8a-8b, 9a-9c. Typically, light modulator 101 comprises at least a second electrode to control the optical layer, which electrode may be on the shown substrate, or on the second substrate.

An optical layer is arranged between the first substrate and second substrate, (not shown in figure 1a) and charged or chargeable particles are in fluidic suspension in the optical layer.

The optical properties of the optical layer, and thus of the light modulator, can be modulated. The optical properties are typically light transmission and/or light reflection. For example, in an embodiment the light modulator is configured to switch between a more transparent optical state and a less transparent optical state. For example, in an embodiment the light modulator may be configured along a grayscale ranging from the more transparent optical state to the less transparent optical state. The light modulator may be part of glazing.

For example, in an embodiment the light modulator is configured to switch between a more reflective optical state and a less reflective optical state. For example, in an embodiment the light modulator may be configured along a scale ranging from the more reflective optical state to the less reflective optical state. For example, in an embodiment like this, reflective particles may be used. For example, this embodiment may be used to create a mirror that can be switched on and off, or can switch between a mirror state and a transparent state. The mirror may be part of glazing.

The first substrate comprises a first driving bus 141 which is arranged on the first substrate. Furthermore, a plurality of regions is defined on the first substrate. One region of the plurality of regions is shown as region 131. Typically, the regions are implemented as one or more copies of a building block; for example, region 131 may be one or more copies of building block 110. A building block is also referred to as a unit cell. The electrode(s) in a building block can be applied to a substrate using a stepper.

In each region of the multiple regions, e.g., in region 131, a first electrode is arranged on the first substrate. The first electrode of each region is connected to the first driving bus through a low-pass element 111.

**Figure 1c** schematically shows an example of an embodiment of light modulator 101, showing more regions of the plurality of regions; shown are regions 131-133. The regions are each connected to driving bus 141 through low-pass element 111.

First driving bus 141 is configured to receive a low-frequency driving signal, e.g., from a controller, which is typically external to the substrate, and which is not shown in figure 1a. The low-frequency driving signal is configured to pass through low-pass element 111. For example, low-pass element 111 may have a cut-off frequency or a cut-off frequency band, so that frequencies above the cut-off frequency or above the cut-off frequency band do not pass through low-pass element 111. RF signals of high frequency, the reception or transmission of which the light modulator is designed, thus cannot dissipate to driving bus 141.

By applying a low-frequency driving signal to the first electrode in the plurality of regions, an electric field is created that extends into the optical field. The electric field induces electric modulation of the particles' position, causing modulation of optical properties of the light modulator. For example, charged particles in the optical field thus move towards or away from the first electrode, which may render the light modulator more or less transparent and/or more or less reflective, depending on the type of particles used in the optical layer. Modulation of the particles' position may be electrophoretic and/or dielectrophoretic modulation.

As the particles move, the optical properties of the light modulator are modulated. For example, by aligning the particles the transparency is increased, while dispersing the particles reduces transparency. The first electrode in a region may completely fill the region, but preferably the first electrode is a line electrode. Region 131 may be filled with one or more copies of a building block.

The controller may be connected to at least the first driving bus on the first substrate and/or to further driving buses on the first and/or second substrate for controlling the optical layer. For example, in a typical embodiment, the controller is connected to and controls a first and second electrode on the first substrate and a first and second electrode on the second substrate.

The controller is configured to receive a control signal instructing the controller to control the optical layer by applying a signal on the driving bus and/or further driving buses. Interestingly, the controller may be arranged to obtain electrical power for driving the electrodes from an RF signal received in the light modulator, at least in part.

**Figure 1b** schematically shows an example of an embodiment of a building block 110. One or more copies of building block 110 may be used for the plurality of regions, e.g., region 131, regions 131-133, etc.

The building block may be applied to the first substrate using a stepped patterning process, wherein a predefined electrode pattern is repeatedly applied multiple times across the first substrate to form the plurality of regions. This may use a so-called stepper. Alternatively, the building block may be applied multiple times in a design program for designing electrode patterns.

Building block 110 shows several main lines 112. The main lines are connected together. The latter can be achieved using a cross connection 113 connecting the multiple main lines 112 together to form one first electrode. Using line electrodes has the advantage that particles in the optical layer can be manipulated effectively. For example, the particles may be aligned with the main lines to increase transparency.

The first electrode of each region of the plurality of regions is connected through a high-pass element to a corresponding RF processing element of a plurality of RF processing elements, wherein the first electrode is adapted to serve as an antenna for RF radiation.

As shown in figure 1a, the RF signal processing element is a phase shifter and is configured for reception of RF radiation, e.g., for subsequent demodulation and obtaining of information in the demodulated signal, or for RF energy scavenging. For example, a light modulator or control unit may comprise a RF demodulator configured to recover RF-modulated data from the received radio frequency signal. The RF demodulator may be external to the light modulator and control unit. Instead of a phase shifter, a different RF signal processing element may be used, e.g., an amplifier for MIMO processing. In this case no combined output signal is used.

The recovered RF-modulated data may be forwarded for further processing, e.g., over a wire, or wireless. For example, the light modulator may comprise an antenna configured to re-transmit recovered RF-modulated data he after re-modulation by a RF modulator. The RF modulator may be part of the light modulator or controller, or may be external thereto.

Shown in figure 1a, region 131, in particular the first electrode of region 131, is connected through high-pass element 121 to a phase-shifter 120. Figure 1c shows each of the regions connected through a high-pass element to a corresponding phase shifter of a plurality of phase shifters. Each of the phase shifters is configurable with a phase shift that is applied by the phase-shifter. Figures 1a, 1c show that the phase shifter corresponding to region 131 is configured to receive a phase shift input 142; the phase shifter corresponding to region 132 is configured to receive a phase shift input 143; the phase shifter corresponding to region 133 is configured to receive a phase shift input 144. The outputs of the plurality of phase shifters are combined into a combined output signal 123.

The high-pass element 121 is configured so that the low-frequency driving signal coming from driving bus 141 cannot pass through. For example, high-pass element 121 may have a cut-off frequency or a cut-off frequency band, so that frequencies above the cut-off frequency or above the cut-off frequency band can pass through high-pass element 121, but frequencies below the cut-off frequency or the cut-off frequency band cannot pass through. RF signals of high frequency can thus enter the phase-shifter and ultimately the combined output signal 123.

Each phase shifter of the plurality of phase shifters, e.g., phase shifters 120, is individually programmable for a particular phase shift. Optionally, each phase shifter of the plurality of phase shifters, e.g., phase shifters 120, is individually programmable for a particular gain, as well.

One or more control lines are arranged on the first substrate connecting to each phase shifter to enable the individual programming. These control lines are not separately shown.

In an embodiment, the frequencies used in the low-frequency driving signal are below 1 kHz, whereas RF signals are typically above 500 kHz. Accordingly, low-pass element 111 may be configured with a cut-off frequency or cut-off frequency band of 1 kHz, or between 500 Hz and 2 kHz, e.g., the cut off frequency may be 1 kHz, optionally with a small band around it, where frequencies are only reduced. Accordingly, high-pass element 121 may be configured with a cut-off frequency or cut-off frequency band of 1 kHz, or between 1kHz and 100 kHz, e.g., 100 kHz, e.g., 1mHz.

In an embodiment, the low-pass elements are configured with cutoff frequencies in a range from 10 Hz to 10 kHz to pass the low-frequency driving signal for control in the optical layer.

In an embodiment, the high-pass elements are configured with cutoff frequencies in a range from 100 kHz to 10 MHz to block the low-frequency driving signal while passing the high-frequency RF signals.

In an embodiment, the low-pass elements are configured with cutoff frequencies in a range from 10 Hz to 10 kHz to pass the low-frequency driving signal for control in the optical layer, and the high-pass elements are configured with cutoff frequencies in a range from 100 kHz to 60 MHz to block the low-frequency driving signal while passing the high-frequency RF signals.

The same filters, e.g., low-pass and high-pass elements, may be used in a MIMO embodiment, e.g., wherein an amplifier is used as the RF signal processing element

In an embodiment, electrophoretic modulation of particles in the light modulator is used as it allows a lower cut-off frequency.

**Figure 1d.1** schematically shows an example of an embodiment of a light modulator configured for transmission of RF signals. The embodiment is similar to the one shown in figures 1a and 1c, except that input and output of the phase shifter is reversed. Shown in figure 1d.1 is region 131, which is one of a plurality of regions, having a first electrode. The first electrode can modulate an optical layer through a signal received from driving bus 141 through a low-pass element 111.

The first electrode of each region of the plurality of regions, including region 131, is connected through a high-pass element to a corresponding phase shifter of a plurality of phase shifters, wherein the first electrode is adapted to serve as an antenna. However, in an embodiment focused on reception of RF signals the first electrodes are connected to the input side of the phase shifter, whereas in embodiments focused on transmission, as in figure 1d.1, the antennas are connected to the output side of the phase shifter. An RF input signal 125 is provided to the plurality of phase shifters. The phase shifters are individually programmable with a phase shift. Figure 1d.1 shows that phase shifter 120 is programmable with a phase shift input 126.

**Figure 1d.2** schematically shows an example of an embodiment of a light modulator 102 switchable between a transmission mode and a reception mode.

Each first electrode of the plurality of regions is connected to a pair of two separate phase shifters 120. A switch 127 is arranged to activate one of the two phase shifters. Switch 127 may be operated by a controller. One switch may be used for all pairs of phase shifters.

A first phase shifter is configured for reception, receiving a respective phase shift input 142, and a second phase shifter is configured for transmission, receiving a respective phase shift input 126. In an embodiment, phase shift inputs 142 and 126 may be equal, such that a single phase shift setting applies to both transmission and reception modes.

In the reception mode, the outputs of the first phase shifters of the plurality of regions are combined into a combined output signal 123, wherein the plurality of first electrodes and respective first phase shifters collectively form a phased-array antenna configured for directional reception of RF signals.

In the transmission mode, the second phase shifters of the plurality of regions each receive an RF input signal, wherein the plurality of first electrodes and respective second phase shifters collectively form a phased-array antenna configured for directional transmission of RF signals. A switch is provided to selectively activate either the first phase shifters for reception or the second phase shifters for transmission, thereby enabling light modulator 103 to switch between the two operational modes.

In most embodiments discussed herein, the light modulator will be drawn in reception mode, e.g., in the version of the light modulator shown in figure 1a. However, it will be understood that a skilled person can modify an embodiment of a reception type light modulator into a transmission type light modulator, or into a switchable type light modulator by changing the phase shifters as shown in figures 1d.1 and 1d.2.

Programming the phase shifters may be used to improve reception of RF signals, to improve RF-based energy scavenging, or to improve RF transmission. Each first electrode of the plurality of regions functions as an individual antenna element configured to receive and/or transmit high frequency RF radiation. By individually controlling the phase shift applied by each corresponding phase shifter, the plurality of first electrodes collectively operates as a phased-array antenna. The directionality and spatial selectivity of RF signal reception and/or transmission can thus be adjusted electronically.

In an embodiment configured for RF reception, the phase shift of each phase shifter is programmed such that RF signals arriving from a selected spatial direction experience constructive interference when combined into the combined output signal 123. RF signals arriving from other directions may experience destructive interference, thereby increasing the antenna gain, improving reception sensitivity, and enhancing signal-to-noise ratio from the selected direction. The programmable nature of the phase shifters enables adjustment of the antenna's reception pattern to optimize reception under changing conditions or interference.

In an embodiment configured for RF-based energy scavenging, the programmable phase shifters allow adaptive steering of the antenna pattern towards RF energy sources, maximizing the received energy available for harvesting. The capability to electronically steer or focus the antenna array increases efficiency of RF radiation capture, thereby improving energy scavenging performance and harvested energy yield.

In an embodiment configured for RF transmission, programming the phase shifters enables controlled steering or shaping of the RF radiation pattern emitted by the plurality of first electrodes. By adjusting the relative phase shifts, RF energy transmitted by individual electrodes constructively interferes in desired directions and destructively interferes in undesired directions. Consequently, transmitted power is concentrated in targeted spatial regions, thereby enhancing transmission efficiency, extending communication range, and reducing interference with unintended receivers. Additionally, the optional individual gain control of each phase shifter provides further flexibility in shaping the antenna radiation pattern.

In an embodiment, the light modulator is part of a glazing unit. The glazing unit may be installed in a building. The phase shifters may be configured semi-permanently to suit the particular building situation outside. For example, the phase shifters may be configured during installation based on the location and orientation of external RF sources, building geometry, or other local environmental factors. After the initial configuration, the settings of the phase shifters may remain unchanged, thereby providing optimized RF reception, transmission, or RF-based energy scavenging tailored specifically to the installation environment.

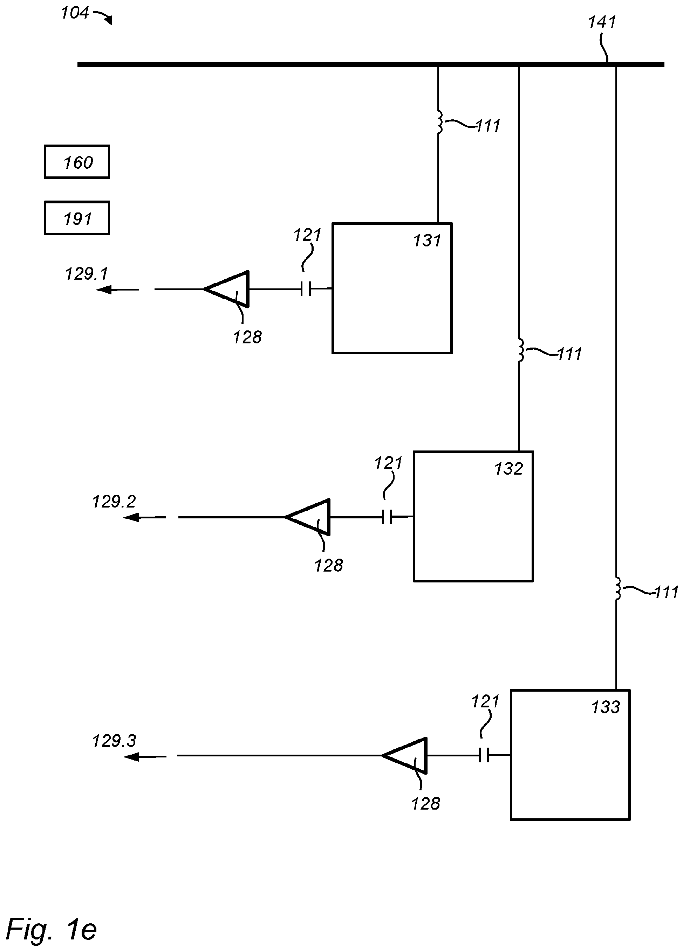

**Figure 1e** schematically shows an example of an embodiment of light modulator 104, showing more regions of the plurality of regions; shown are regions 131-133. The regions are each connected to driving bus 141 through low-pass element 111.

First driving bus 141 is configured to receive a low-frequency driving signal, e.g., from a controller, which is typically external to the substrate, and which is not shown in figure 1a. The low-frequency driving signal is configured to pass through low-pass element 111. The same type of low-pass elements may be used as in phased array type embodiment. As in phased array type embodiments, a low-frequency driving signal can be applied to the first electrodes in the plurality of regions, to modulate the optical properties of the light modulator. The regions may be filled with one or more copies of a building block.

A controller 160 may be connected to at least the first driving bus on the first substrate and/or to further driving buses on the first and/or second substrate for controlling the optical layer. For example, in a typical embodiment, the controller is connected to and controls a first and second electrode on the first substrate and a first and second electrode on the second substrate.

Each of the regions is connected through a high-pass element 121 to a corresponding RF signal processing element 128, in this case an amplifier. The RF signal processing element may further comprise an analog-to-digital converter.

The outputs of the amplifiers are individually forwarded to a MIMO processor 191. The high-pass element 121 may be the same as in phased array type embodiments. Shown in figure 1e, individual output signals 129.1-129.3 are forwarded to MIMO processor 191. Typically, more than three individual output signals are used in an embodiment.

The MIMO processor 191 is configured to perform digital signal processing operations on the amplified signals received from the plurality of regions. These operations may include channel estimation, spatial filtering, equalization, and symbol detection, enabling the extraction of data streams from the spatially multiplexed RF signals. The MIMO processor may also perform timing synchronization, noise mitigation, and other baseband processing functions required for coherent reception across multiple spatial channels.

The MIMO configuration may be used both for RF reception and for RF transmission. In the case of reception, the MIMO processor receives individual antenna signals from the plurality of regions. In the case of transmission, the MIMO processor provides individual antenna signals to the plurality of regions for transmission. In both cases, e.g., after reception or before transmission, the signals may be amplified, e.g., by the plurality of amplifiers.

Both MIMO and phased array configurations work especially well in large light modulators, e.g., as used in glazing units. For example, a light modulator in which one or both dimensions are at least 1 meter, e.g., at least 1 by 1 meter.

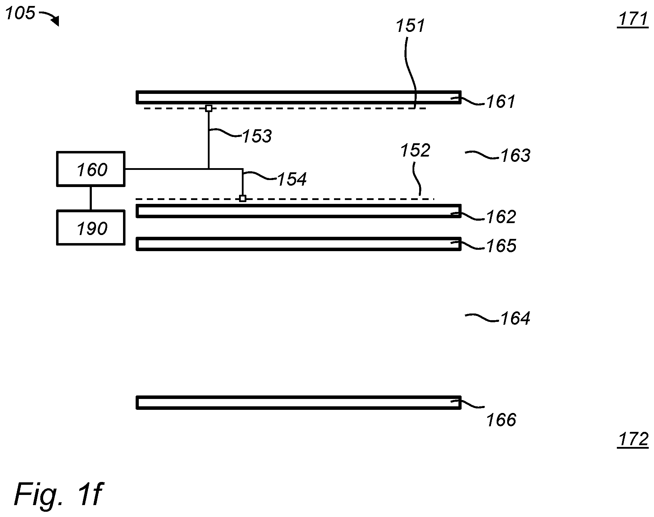

**Figure 1f** schematically shows a cross-section of an example of an embodiment of a glazing unit. For clarity, the side of the glazing unit that would typically be used on the outside is on the top at reference 171; the side of the glazing unit that would typically be used on the inside is on the bottom at reference 172. For example, 171 may be the exterior of a building, and 172 the interior of a building.

The glazing unit comprises a light modulator according to an embodiment. In particular, Figure 1f shows a first substrate 161, a second substrate 162, and an optical layer 163 therebetween. First substrate 161 has at least one electrode for light modulation, which is dual used for reception/transmission of RF signals. For example, in an embodiment, first substrate 161 has at least two interdigitated electrodes 151. The at least two interdigitated electrodes 151 are connected to controller 160 with a connection 153.

In an embodiment, second substrate 162 also has one or more electrodes. In an embodiment, these electrodes are only used for light modulation, and are not involved in reception and/or transmission of RF. However, in an advantageous embodiment, these electrodes may have the dual purpose of creating a ground signal. In a preferred embodiment, second substrate 162 has at least two interdigitated electrodes 152 for light modulation. The at least two interdigitated electrodes 152 are connected to controller 160 with a connection 154.

Glazing unit 104 further comprises a first pane 165 and a second pane 166 arranged parallel to each other. Between first pane 165 and second pane 166 there is an isolating layer 164. For example, isolating layer 164 may be a low-pressure layer.

Preferably, insulating layer 140 is a low-pressure layer, also known as vacuum insulated glass (VIG). In an embodiment, the low-pressure layer has a pressure of at most 1 Pa, or at most 0.1 Pa, or at most 0.05 Pa.

The low-pressure layer reduces heat conduction across the cell gap between its enclosing substrates. By sealing a low-pressure layer between two substrates a thermal barrier is created that reduces heat conduction between the substrates. Vacuum insulated glass is useful in applications requiring thermal insulation, such as in energy-efficient 5 windows for buildings and temperature-controlled environments in vehicles, e.g., cars.

In an embodiment, isolating layer 164 may comprise argon gas, another inert gas, or a gas mixture at reduced pressure, to minimize thermal conduction between first pane 165 and second pane 166. For example, isolating layer 164 may be an argon-filled insulating layer that provides thermal isolation between exterior side 171 and interior side 172 of the glazing unit. The use of argon or a similar inert gas improves the thermal insulation properties of the glazing unit by reducing convective heat transfer. Additionally, isolating layer 164 may provide acoustic insulation benefits.

Variations to the arrangement shown in figure 1f are possible. For example, where two substrates are adjacent, such as substrates 162 and 165 in figure 1f, they could be replaced by a single substrate. Furthermore, as shown the light modulator is arranged at an exterior side of the glazing unit, however it is also possible to arrange the light modulator between the first pane and the second pane. In that case, the light modulator may be applied to, e.g., substrate 165, inside of the isolating layer. The latter arrangement has the advantage that the light modulator is protected by substrate 165. On the other hand, having the light modulator outside the insulating layer improves RF reception/transmission.

In both options, the substrate having the electrodes used for RF reception/transmission, e.g., the substrate having the phase shifters, here substrate 161, would be closer to the exterior of the building than the other substrate, here substrate 162. In an embodiment, starting from exterior 171 there are the following substrates: first substrate 161, optical layer 163, second substrate 162, first pane 165, insulating layer 164, second pane 166.

The glazing unit may comprise a clip surrounding the glazing unit, the first pane and second pane being attached to the clip, the clip being arranged to space the first pane and second pane from each other.

The isolating layer may be vacuum or comprise an isolating gas, e.g., Argon.

Instead of a phase shifter, a different RF signal processing element may be used, e.g., an amplifier for MIMO processing. In this case no combined output signal is used.

The glazing unit comprises a first glass pane 165 and a second glass pane 166. The first and second glass panes are parallel to each other forming a glazing unit housing. The glazing unit comprises a first substrate 161 and a second substrate 162. The first and second substrates are arranged in the glazing unit parallel to the first and second glass panes.

The first and second substrates form an optical modulator, also referred to as a light modulator. In an electrophoretic optical modulator, e.g., the electrophoretic force is used to move charged particles. Typically, at least two interdigitated electrodes are arranged on a second side of the first substrate, the second side of the first substrate being opposite the first side of the first substrate, the second side of the first substrate facing a first side of the second substrate. At least two interdigitated electrodes are arranged on the first side of the second substrate, the first side of the second substrate facing the first substrate. An optical layer 163 is arranged between the first and second substrate, charged or chargeable particles being in fluidic suspension in the optical layer. The particles and electrodes on the first and second substrate are configured to cooperate in electrophoretic modulation of the particles' position causing modulation of light passing through the glazing unit. Instead of electrophoretic, dielectrophoretic modulation may be used.

For example, the known system describes how such an optical modulator might work. An example is also provided with reference to figures 9a-9c, discussed below.

The glass panels may or may not be coated. For example, in an embodiment glass panel 165 may be uncoated, while glass panel 166 may be coated.

In this example, the glazing unit is an isolating glazing unit comprising at least two glass panes. Between the two glass panes an isolating layer 164 is arranged. The isolating layer 164 could be a vacuum or may comprise an isolating gas, e.g., argon. The glazing unit may have more than one thermally isolating layer, and may have more than two glass panes.

The glazing unit may comprise a controller 160 connected to the at least two interdigitated electrodes on the first substrate and/or to the at least two interdigitated electrodes on the second substrate for controlling the optical layer. Controller 160 may be configured to receive a control signal instructing the optical layer control. For example, controller 160 may receive an instruction from outside the glazing unit to increase or decrease the transparency of the glazing unit. In response thereto, controller 160 may arrange the particles in the optical layer to follow the instruction. For example, controlling signals to the interdigitated electrodes may comprise an opposite, or out-of-phase DC signal on some pairs of electrodes, whereas other pairs of electrodes may receive the same signal, or an in-phase signal.

Controller 160 is not necessary. For example, instead of performing control in the glazing unit, the glazing unit may directly receive controlling signals from outside the glazing unit, e.g., from an external controller.

For example, controller 160, if present, may be arranged to obtain electrical power from the antenna signal for driving, at least in part, the interdigitated electrodes 151, 152 on the first and second substrates 161, 162. This has the advantage that increasing or decreasing the transparency of the glazing unit needs no or less external power.

Glazing unit 104 may comprise or be connected to an energy storage 190, e.g., a battery or a capacitor. Glazing unit 104 may be configured to charge energy storage 190 using energy scavenged from RF radiation received by the light modulator.

The glazing unit may comprise an antenna configured to re-transmit the recovered RF modulated data after re-modulation. For example, data obtained from an RF signal received in the light modulator may be retransmitted on interior side 172. The antenna for retransmission is not shown in figure 1f. For example, data obtained from an RF signal received in the light modulator may be forwarded over a data wire on interior side 172. The wire for forwarding is not shown in figure 1f.

A light modulator according to an embodiment has the advantage that radio frequency signals, e.g., antenna signals that do not easily penetrate a glazing unit, e.g., due to coating and the like, can still be received on the inside of the building. Likewise, a light modulator configured for transmitting would facilitate a transmitting device on the inside, e.g., inside a building, to transmit to the outside, e.g., to the exterior of the building. For example, smartphone reception in a building with glazing units according to an embodiment, and/or smartphone transmission in a building with glazing units according to an embodiment, may be improved.

For example, the glazing unit may comprise a radio frequency demodulator, and/or a radio frequency modulator; e.g., controller 160 may be so configured, or additional circuitry may be added to the glazing unit. Frequency modulation and demodulation may not both be needed, or may not both be needed at the same time. For example, a received signal may be forwarded over a wired connection. A signal received over a wire may be forwarded over an antenna. The antenna signals may comprise 5G signals. Transmitted signals on the interior side, may be Wi-Fi signals. For example, received 5G data may be forwarded as Wi-Fi data.

Interestingly, the frequency of RF antenna signals and the frequency of DC signals used for controlling interdigitated electrodes in the optical modulator part is quite different. For example, the interdigitated electrodes on the first and second substrate may be controlled with an electric signal with a frequency below 1 kHz, preferably below 100 Hz, whereas the antenna signal may be above 100 MHz, or even 1 GHz. This difference allows re-use of all or part of the interdigitated electrodes as will be further discussed herein as well.

Shown in figure 1f, from the outside 171 of the building to the inside 172 of the building, there is shown:
A first substrate 161; interdigitated electrodes 151 for light modulation; optical layer 163 comprising charged particles for light modulation; interdigitated electrodes 152 for light modulation; second substrate 162; a glass pane 165; an isolating layer 164; and a glass pane 166.

Panes 165 and/or 166 may be of glass, the substrate may be of polyethylene, but this is not necessary. Both panes and substrate may be plastics, or both may be glass, as is desired. Preferably, the substrates are dielectric, and glass, and substrates are both transparent. Preferably, transparent electrodes are used as well. Instead of transparent, translucent materials may be used.

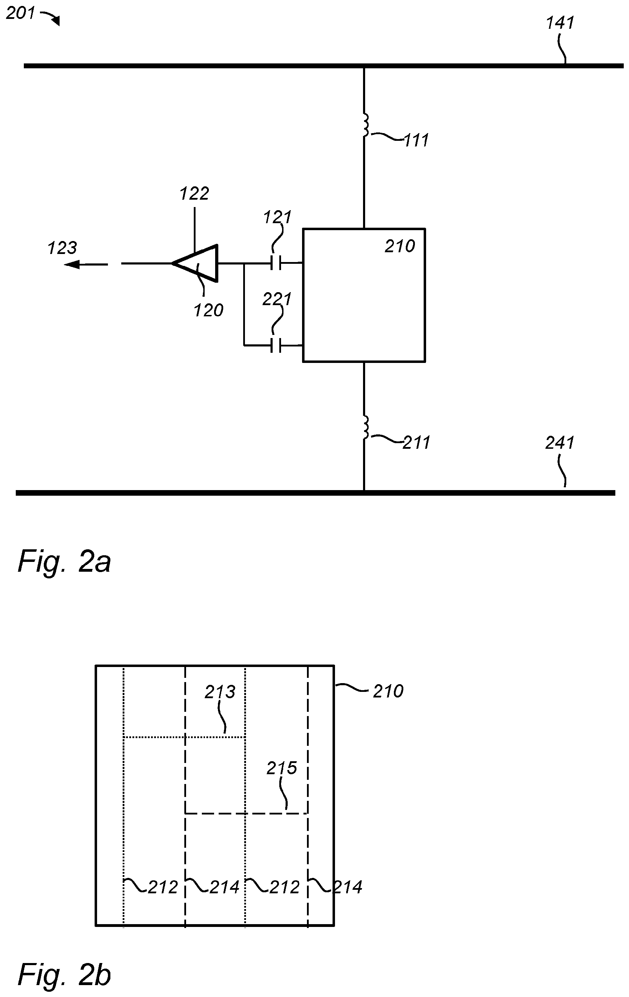

**Figure 2a** schematically shows an example of an embodiment of a light modulator 201. Like light modulator 101, light modulator 201 is configured for electrically modulating its optical properties, but is also configured for reception and/or transmission of radio frequency signals. At least some of the electrodes used to modulate the optical properties in light modulator 201 have a dual purpose in that they also function as an antenna for the reception and/or transmission of radio frequency signals.

Figure 2a shows part of a first substrate of light modulator 201. The light modulator comprises the first substrate and at least a second substrate, arranged parallel to each other in the light modulator. An optical layer is arranged between the first substrate and second substrate. The optical properties of the optical layer, and thus of the light modulator, can be modulated.

The first substrate comprises a first driving bus 141 and a second driving bus 241, which are arranged on the first substrate. Furthermore, a plurality of regions is defined on the first substrate. One region of the plurality of regions is shown as region 210. In each region of the multiple regions, e.g., in region 210, a first electrode and a second electrode are arranged on the first substrate. The first electrode of each region is connected to the first driving bus through a low-pass element 111. The second electrode of each region is connected to the second driving bus through a low-pass element 211. Typically, the first and second electrodes are interdigitated; although this is not necessary as the embodiment could be applied in non-interdigitated electrophoretic light modulators, e.g., using an accumulator electrode.

Typically, the regions are implemented as one or more copies of a building block; for example, region 210 may be one or more copies of building block 210.

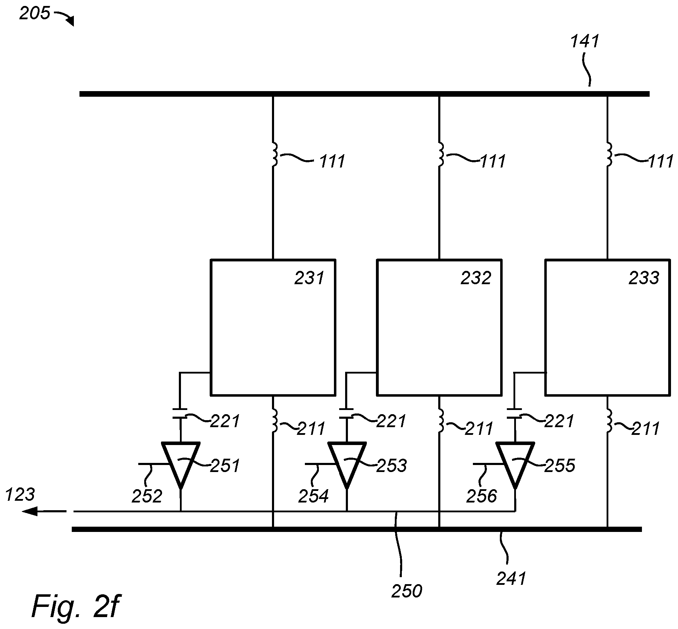

**Figure 2b** schematically shows an example of an embodiment of a building block 210. One or more copies of building block 210 may be used for the plurality of regions, e.g., region 210, regions 231-233 in figure 2f, etc.

Like other building blocks, building block 210 may be applied to the first substrate using a stepped patterning process.

Building block 210 shows several main lines 212. The main lines are connected together with a cross connection 213. There may be several cross connections to connect all main lines that belong to the first electrode together. Main lines 212 and cross connections 213 together form the first electrode.

Building block 210 shows several main lines 214. The main lines are connected together with a cross connection 215. There may be several cross connections to connect all main lines that belong to the second electrode together. Main lines 214 and cross connections 215 together form the second electrode.

The main lines of the first electrode and of the second electrode are interdigitated, e.g., alternatingly arranged on the substrate. This has the advantage that an electric field can be created across the substrate by applying a different voltage to the first and second electrode.

Cross connections 213 and 215 are optional as the main lines could be connected to form a single electrode through other means.

Both the first electrode and the second electrode of each region of the plurality of regions are connected through a high-pass element to a corresponding phase shifter of a plurality of phase shifters. The first electrode is connected to phase shifter 120 through high-pass element 121; the second electrode is connected to phase shifter 120 through high-pass element 221.

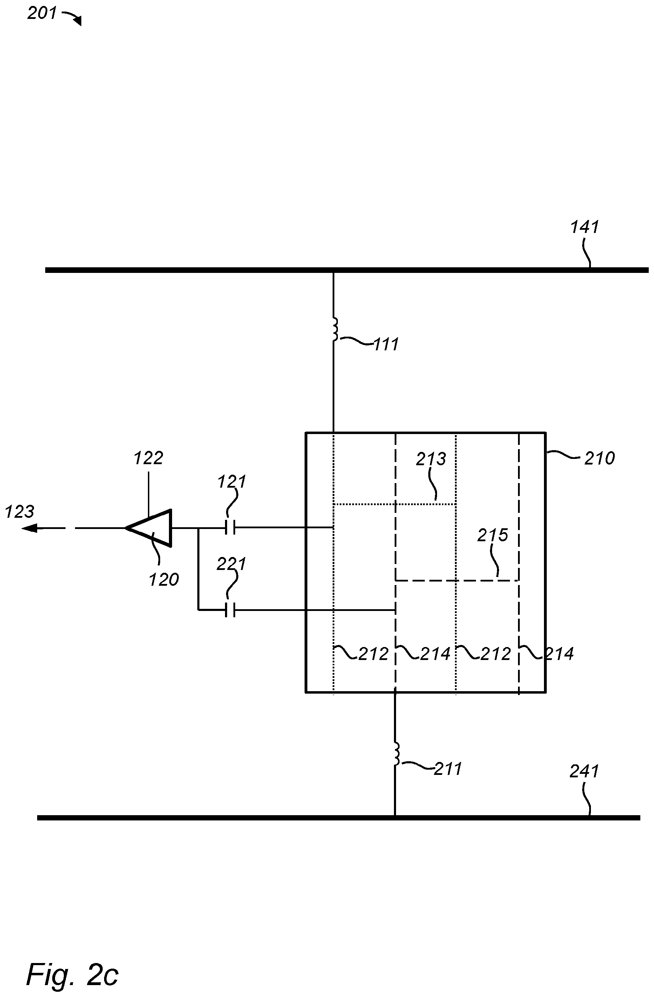

**Figure 2c** schematically shows an example of an embodiment of a light modulator 201. Figure 2c schematically indicates how the electrodes of building block 210 may be connected.

Note that all electrodes, e.g., the first and second electrodes, in building block 210 are connected to the input of phase shifter 120, each through a high-pass element. On the other hand, the electrodes are each connected to a different corresponding driving bus, each through a low-pass element.

Although two electrodes per building block is a preferred number, it is possible to use more than two electrodes, e.g., three or more, each with a corresponding driving bus. Having more than 2 electrodes allows finer control of optical properties of the light modulator.

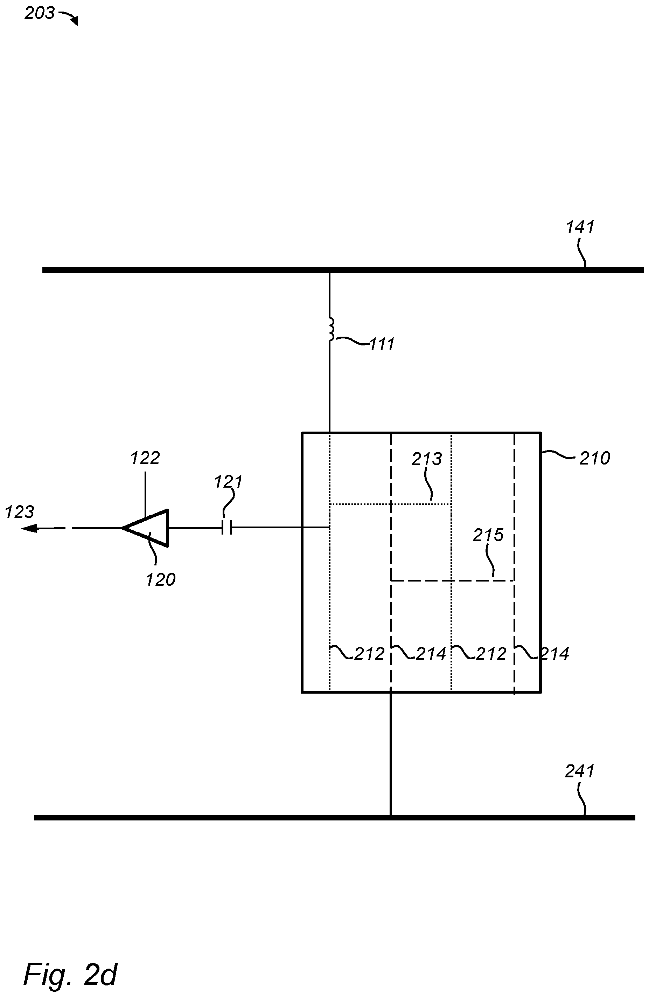

**Figure 2d** schematically shows an example of an embodiment of a light modulator 203. Light modulator 204 is similar to light modulator 201. Light modulator 204 also comprises two electrodes per region. Both electrodes are used for manipulation of the optical layer. Indeed, the first electrode comprising main lines 212 is connected to driving bus 141, while the second electrode comprising main lines 214 is connected to driving bus 241. However, only one of the electrodes is used for RF signals. In figure 2d the first electrode is connected, through high-pass element 121, to a phase shifter. The shown embodiment is configured for RF reception, though it could be configured for RF transmission or could be made switchable between reception and transmission. Note that no low-pass element is needed to connect the second electrode to driving bus 241.

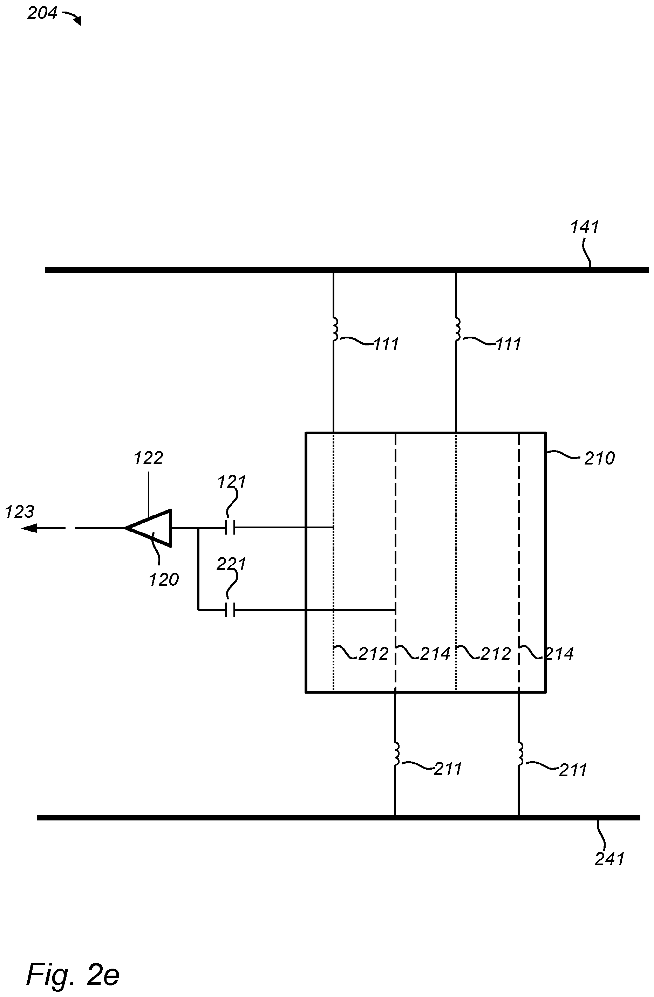

**Figure 2e** schematically shows an example of an embodiment of a light modulator 204, a variant of light modulator 201. In the building block used for the regions, no cross connections are used. Instead, the main lines each receive a connection to the driving bus, each through a low-pass element. In yet a further variant, one or more of the electrodes are connected through cross bridges, while one or more of the electrodes are not, but are instead connected to their corresponding driving bus.

**Figure 2f** schematically shows an example of an embodiment of a light modulator 205. Shown in figure 2f are a plurality of regions, shown in particular are region 231, region 232, and region 233. Each of the regions can be filled with one or more copies of a building block, such as building block 210. Each of the regions has a first and second electrode, which are preferably interdigitated. All electrodes in a region are connected through a high-pass element to a phase shifter corresponding to the region. In figure 2f only one high-pass element is shown for each region, but multiple ones may be used, e.g., one for each electrode in the region. Each electrode in each region is connected through a low-pass element to a driving bus.

Shown in figure 2f are three phase shifters: phase shifter 251 corresponding to region 231, phase shifter 253 corresponding to region 232, phase shifter 255 corresponding to region 233. Phase shifters can be programmed individually, e.g., to do beam forming on the RF reception/transmission.

The embodiment is shown in an RF reception configuration. The output of the phase shifters is combined in an output signal 123. Output signal 123 could be used by a controller, a capacitor, or charger, e.g., a battery charger, etc.

Figures 2a-2f are shown for a phase shifter embodiment. Instead of a phase shifter, a different RF signal processing element may be used, e.g., an amplifier for MIMO processing. In this case no combined output signal is used, and an antenna signal per region is provided to a MIMO processor, or an antenna signal per region is received from the MIMO processor.

In an embodiment, the regions in the plurality of regions on the substrate contain one or more electrodes. If a region contains two or more electrodes, then they are preferably interdigitated. A good way to create the electrodes in a region is by stepping a building block, or unit cell, e.g., using a stepper.

**Figure 3a.1** schematically shows an example of an embodiment of a light modulator 301.

Two regions are shown in figure **Figure 3a.1**. The first region comprises multiple copies of a building block; shown are building block 231 and 231.1. All building blocks used to fill a region may be identical, but this is not necessary. Building block 231 and building block 231.1 may, or may not, be the same.

Each building block has multiple electrodes, typically multiple electrode lines. The electrodes on the multiple building blocks are connected to form at least a first electrode and a second electrode. The first electrode is connected to driving bus 141 through a low-pass filter 111. The second electrode is connected to driving bus 241 through a low-pass filter 211. For example, in block 232, the first electrode is connected to its driving bus through connection 262; in block 232, the second electrode is connected to its driving bus through connection 263. For example, the first electrode in block 232 is connected to block 232.1 thus extending the first electrode of this region to both blocks. The same hold for the second electrode.

All electrodes, e.g., the first and second electrodes, are connected to a phase shifter, here phase shifter 251. They are connected through a high-pass element, only one of which is shown in figure **Figure 3a.1**.

A control signal on driving bus 141 is distributed to the first electrode, which extends across the first region, including extending across all building blocks in the region. A control signal on driving bus 241 is distributed to the second electrode, which extends across the first region, including extending across all building blocks in the region.

The same holds for the other shown region. The second region comprises multiple copies of a building block; shown are building block 232 and 232.1, which may or may not be equal. Electrode lines in the building blocks in the region are connected up to form two or more electrodes. The first and second electrode extend across the second region, including extending across all building blocks in the region.

In an embodiment, which is also shown in figure **Figure 3a.1**, a common electrode line 250 extends across the substrate, each phase shifter output or each phase shifter input (in case of transmission) connecting to line 250. Line 250 carries the common output signal 123.

The output of phase shifter 253 of the second region is connected to the output of phase shifter 251. Each phase shifter is programmable with a phase shift; shown are phase shift input 252 and phase shift input 254.

Schematic connection 261 connects parts of the building block 232 and 232.1 that are connected into the first electrode. Schematic connection 261 connects parts of the building block 232 and 232.1 that are connected into the second electrode.

In some embodiments, e.g., of figure **Figure 3a.1**, one driving bus 141 provides control signals to all first electrodes in all regions, and all second electrodes in all regions get their control signals from one driving bus.

**Figure 3a.2** schematically shows an example of an embodiment of a light modulator 302. Light modulator 302 is a variant of light modulator 301. In light modulator 302 a further plurality of regions is provided. Only one region of the plurality of regions is shown in**Figure 3a.2**, comprising the building blocks 232 and 232.1. Only one region of the further plurality of regions is shown in **Figure 3a.2****Figure 3a.2**, comprising the building blocks 231 and 232.1.

Although now shown, both pluralities comprise multiple regions, e.g., as shown herein.

The plurality of regions is supported by a driving bus 141, and optionally a second driving bus 241, e.g., as in figures Figure 3a.1, 2f, amongst others.

The further plurality of regions is defined on the first substrate, wherein in each region a first electrode is arranged on the first substrate, which first electrode is connected to a further first driving bus 145 through a low-pass element 111, the first electrode of each region of the plurality of regions is connected through a high-pass element 221 to a corresponding phase shifter 251 of a plurality of phase shifters, wherein the first electrode is adapted to serve as an antenna. If an optional second electrode is used, it may be supported by a further second driving electrode 245.

The further plurality of regions controls a corresponding part of the optical layer, just as the plurality of regions do. However, while the optical part is independent between the plurality and further plurality, the phase shifters do not need to be independent, and may all combine into combined output 123.

**Figure 3a.3** schematically shows an example of an embodiment of a light modulator 303, which is a variant of light modulator 301. In figure 3a.3 the building blocks are connected between them, e.g., through connection 261. The building blocks also have independent connection with the driving buses through corresponding low-pass elements.

In an embodiment, a region of the plurality of regions comprises multiple building blocks at least two of which are connected to a driving bus through at least two respective low-pass elements.

In an embodiment, a region of the plurality of regions comprises multiple building blocks at least two of which are connected to the first driving bus and to the second driving bus through at least two respective pairs of low-pass elements.

**Figure 3b** schematically shows an example of an embodiment of a light modulator 304, which is a variant of light modulator 301. In figure 3b, building blocks are arranged in a two-dimensional pattern across the substrate. For example, multiple building blocks are arranged in a checkerboard pattern to fill a larger region. The larger region may have the same shape as the building blocks but that is not needed. Shown are building blocks 231, 231.1, 231.2, and 231.3.

The building blocks are interconnected to form at least a first electrode and a second electrode. One interconnection 264 is shown in figure 3b; interconnection 264 ensures the first electrode and the second electrode of this region extends to all building blocks.

**Figure 3c** schematically shows an example of an embodiment of a light modulator 305, which is a variant of light modulator 304.

Shown in figure 3c are four regions of the plurality of regions; shown are regions A-D. Each region is formed of multiple building blocks; figure 3c shows four building blocks per region. Building blocks A.1-A.4 for region A; building blocks B.1-B.4 for region B; building blocks C.1-C.4 for region C; building blocks D.1-D.4 for region D.

Each of the regions forms a first electrode and a second electrode. The first and second electrode each extend over the building blocks in the region. Each region has a first electrode connected to a first driving bus 141, and a second electrode connected to a second driving bus 241. In both cases the connection is through a low-pass element.

Both the first and second electrode of each region is connected to a phase shifter corresponding to that region. One high-pass element is used for each electrode and each region, but only one high-pass element is shown for each region. Phase shifters a-d correspond to regions A-D. The output of the phase shifters combine into a combined output 123.

The number of building blocks is typically the same for all regions, but this is not necessary; for example, near edges or corners it may be convenient to change the number of building blocks per region; for example, a substrate may be cut to a specific dimension, which may include reducing the number of building blocks in one or more regions.

In an embodiment, the number of regions and the number of phase shifters is 8 or more, e.g., 16 or more, e.g., 32 or more, e.g., 64 or more; for example, the number of regions and the number of phase shifters is 64. In an embodiment, the number of regions and the number of phase shifters is 256 or less, e.g., 128 or less, e.g., 64 or less. In an embodiment, the number of regions and the number of phase shifters is between 32 and 128. In an embodiment, the number of defined regions and/or phase shifters is below 1000, or between 25 and 500, or between 50 and 100, e.g., 64.

Figures 3a-3c are shown for phase shifter embodiments. Instead of a phase shifter, a different RF signal processing element may be used, e.g., an amplifier for MIMO processing. In this case no combined output signal is used, and an antenna signal per region is provided to a MIMO processor, or an antenna signal per region is received from the MIMO processor.

### Ground reference

In an embodiment, a ground reference signal may be used. For example, in an RF power scavenger configuration, a ground reference may be used in an energy storage charger, e.g., a battery charger, capacitor charger. A ground reference may also be used for a MIMO processor.

For example, an embodiment may comprise an energy storage charging circuit, e.g., a battery charging circuit, the charging circuit having a first input coupled to combined RF output signal 123 and a second input coupled to a ground reference, the charging circuit being configured to convert the combined RF output signal into electrical energy for charging an energy storage device. Energy storage charging circuit and/or energy storage device may be comprised in glazing unit. Energy storage charging circuit and/or energy storage device may be external to the glazing unit.

For example, the phase shifters may be connected to the ground reference.

In an embodiment, the ground reference may be provided by a common system ground, for example, a grounding line from a general power supply, e.g., that is shared among various components within the building or structure. For example, a ground input of the energy storage charging circuit or a ground input of the phase shifters may be connected to an existing electrical grounding infrastructure. This grounding infrastructure may comprise conductive grounding conductors physically connected to earth electrodes, grounding rods, or grounding plates embedded in the soil surrounding the building, etc.

Alternatively, the ground reference may be provided by a dedicated grounding arrangement, such as a conductive metallic layer integrated onto the second substrate of the glazing unit, or by using the glazing unit frame as an external chassis ground.

For example, a conductive layer, such as copper or aluminum, may be applied, e.g., deposed, onto or within the second substrate or part thereof. The conductive layer may be electrically coupled, typically via conductive adhesive or conductive vias, to a ground input of the energy storage charging circuit and/or a ground input of the phase shifters, providing a localized and low-impedance grounding path.

If the glazing unit frame is employed as an external chassis ground, electrical coupling between the ground input of the charging circuit and/or the ground input of the phase shifters and the glazing unit frame may comprise electrically connecting to connection points of the glazing unit frame, for example, by using conductive brackets, connectors, or conductive adhesives. Additionally, the glazing frame itself may be connected to an external ground reference, such as building structural elements or dedicated earth grounding points.

A particularly effective ground reference may be obtained from one or more electrodes on the second substrate. The one or more electrodes may cooperate with the one or more electrodes on the first substrate to control the optical layer, e.g., the spatial modulation of particles in fluidic suspension in the optical layer. In addition, the one or more electrodes on the second substrate may be used for a dual purpose as a ground reference, e.g., as detailed herein.

**Figure 4a.1** schematically shows an example of an embodiment of a light modulator. Shown in figure 4a.1 is a second substrate which may be used for controlling the optical layer, as well as providing a ground reference for the phase shifters of the first substrate. In addition, the ground reference may be used for other purposes where a ground reference may be needed, e.g., in an energy storage charger.

For example, the second substrate according to figures figures4a.1 may be combined with any one of the substrates according to figures 1a-3c. For example, the second substrate according to figures 4a.2, 4b, and/or 4c may be combined with any one of the substrates according to figures 1a-3c.

Figure 4a.1 shows a second substrate on which are applied, a first driving bus 141, and a first electrode. The first electrode is connected to the first driving bus through a low-pass element 111. The first electrode is arranged to cooperate with the first electrode and optionally second and further electrodes on the first substrate. This means that the first substrate on the second substrate could be a conductive layer. Preferably however, the first electrode on the second substrate comprises multiple electrode lines connected to form the first electrode. Typically, the electrode lines on the second substrate mirror the electrode lines on the first substrate.

The first electrode is connected through a high-pass element to form a ground signal 124.

Shown in figure 4a.1, the first substrate comprises multiple main lines 112 connected through a cross connection 110.

**Figure 4a.2** schematically shows an example of an embodiment of a light modulator. Figure 4a.2 is similar to Figure 4a.1 except that two electrodes are arranged on the substrate. This allows a light modulator with four electrodes-two for each substrate-which is the preferred arrangement for light modulation.

Figure 4a.2 shows a second substrate on which are applied, a first driving bus 141, a second driving bus 142, a first electrode, and a second electrode. The first electrode is connected to first driving bus 141 through a low-pass element 111. The second electrode is connected to second driving bus 241 through a low-pass element 211.

Both the first and second electrodes are connected through a high-pass element to form a combined ground signal 124.

Shown in Figure 4a.2, the first substrate comprises multiple main lines 212 connected through at least one cross connection 213 forming the first electrode, and multiple main lines 214 connected through at least one cross connection 215 forming the second electrode. The first electrode is connected to ground signal 124 through high-pass element 121. The second electrode is connected to ground signal 124 through high-pass element 221. Note that no phase shifter is needed.

Although it is not necessary for phase shifters, nevertheless a plurality of regions may be defined on the second substrate. For example, the plurality of regions may mirror the regions on the first substrate. Each region has a first electrode and optionally a second electrode. The first electrode and second electrode are each connected to a corresponding driving bus through a low-pass element. The first electrode and second electrode are each connected to a combined ground 124 through a high-pass element.

**Figure 4b** schematically shows an example of an embodiment of a light modulator. The substrate shown in Figure 4b is a variant of the substrate shown in Figure 4a.2. Here, only the first electrode is used as a ground reference. The first electrode is connected through a low-pass and high-pass element to the driving bus and ground signal respectively. The second electrode is not connected to ground signal 124 and is directly connected, e.g., without a low-pass element, to driving bus 241.

**Figure 4c** schematically shows an example of an embodiment of a lightmodulator. The substrate in Figure 4c is a variant of Figure 4a.2. Like in Figure 3c, the substrate has been partitioned into multiple regions, each with multiple building blocks. However, all electrodes connect through a high-pass element to a combined ground signal 124. The first and second electrodes connect to their corresponding driving buses 141 and 241, respectively, through a low-pass element. Note that the first electrode of each region is directly connected to each first electrode of the other regions; likewise for the second electrode.

### Phase shifters

Various options are possible for the phase shifters in an embodiment, e.g., an embodiment according to any one of Figures 1a-4c.

In an embodiment, each phase shifter of the plurality of phase shifters is individually programmable for a particular phase shift and optionally for a particular gain. One or more control lines may be arranged on the first substrate connecting to each phase shifter to enable the individual programming. In practice, this means that the control lines may carry digital and/or analog control signals provided by an internal or external controller to each phase shifter. These control signals set specific phase shifts, and optionally, gain adjustments, at each phase shifter.

Each phase shifter may include digital phase adjustment circuitry, analog varactor-based tuning elements, or digitally controlled attenuators to independently configure phase and optionally amplitude.

In a further embodiment, each phase shifter is configured to provide an adjustable phase shift to an RF signal received from its corresponding first electrode. For example, each phase shifter may comprise an input terminal to receive the RF signal, an adjustable phase element configured to modulate the phase of the RF signal in response to signals carried by the control line, and an output terminal to transmit the RF signal with the adjusted phase shift. The phase shift may be stored by the phase shifter, but may also be taken from the control line when needed. The latter option significantly simplifies the design of the phase shifter.

The RF signal path within a phase shifter may include passive components such as varactor diodes or tunable delay lines, or active components such as digitally programmable phase-shifting integrated circuits. The adjustable phase element may be realized using PIN diode-based switched-line phase shifters, reflective-type phase shifters employing varactor diodes, or integrated RF CMOS or GaAs phase-shifter modules. Such adjustable elements are directly responsive to externally provided signals on the control line, thus allowing precise electronic control of RF beam patterns.

The plurality of phase shifters may be programmed for directional reception and/or transmission corresponding to a specified direction of maximum gain. For example, each phase shifter may be programmed with a specific relative phase offset to generate constructive interference of signals coming from or transmitted toward a desired spatial direction, thereby increasing signal strength or antenna gain in that particular direction. For example, the phase shifters may operate cooperatively as a phased-array antenna. Adjusting the relative phase differences among the elements provides beam-steering capability, enabling selective spatial focusing or shaping of RF radiation patterns. This capability enhances performance significantly by optimizing the array's gain and interference rejection according to user-defined directional requirements or changing RF environmental conditions.

The plurality of phase shifters may be configured as a high-frequency passive phased-array receiver. Such a passive phased-array configuration indicates that the individual phase shifters do not actively amplify RF signals but rather rely on passive RF elements-such as transmission line sections, lumped reactive elements, e.g., inductors or capacitors, or diode-based reactive tuning components-to achieve phase shifting. Passive phased-arrays benefit from lower power consumption, inherent linearity, and minimal noise contribution, thus making them suitable for RF reception or RF-based energy harvesting applications.

Controlling gain in addition to phase individually at each phase shifter can be advantageous in both RF reception and RF transmission scenarios. For RF transmission, independently adjusting the gain of each antenna element enables amplitude tapering across the phased-array. Such amplitude tapering shapes the antenna's radiation pattern by reducing side-lobe levels, thus decreasing interference toward unintended directions and increasing transmitted signal strength toward desired directions. This increases the effective radiated power, extends transmission range, and improves directional selectivity. For RF reception, individually controlling gain allows compensation for amplitude differences among antenna elements due to manufacturing variations, antenna impedances, or installation-specific conditions. By equalizing signal strength across antenna elements, gain control enhances signal combining efficiency, optimizes sensitivity, and maximizes the signal-to-noise ratio. Additionally, in both transmission and reception, dynamically adapting gain provides flexibility to respond effectively to changing environmental conditions or interference.

In an embodiment, the programming of each phase shifter may be non-volatile, such that each phase shifter retains its programmed phase shift and optionally gain shift even in the absence of electrical power. For example, the programmed phase shift values may be stored within a non-volatile memory integrated into or associated with each phase shifter. Suitable non-volatile memory technologies include EEPROM, Flash memory, ferroelectric RAM, or other electrically erasable storage devices. The advantage of non-volatile programming is that the phased-array configuration persists through power interruptions or periods when the glazing unit is powered down. This feature is particularly beneficial in applications where the optimal phase shift values are determined through initial calibration or measurement procedures and are expected to remain unchanged over long operational periods. For example, this may be used in a glazing application.

Alternatively, the programming of the phase shifters may be volatile, wherein the phase shift values are temporarily stored and maintained only when the phase shifter circuitry is powered. In such an embodiment, each phase shifter requires programming each time power is applied or restored. Typically, a central internal controller or an external control device would provide the necessary programming signals upon each power cycle. Volatile programming implementations may simplify the hardware complexity and reduce cost, since persistent memory devices are not required at each individual phase shifter. Such an approach may be advantageous in dynamic environments where frequent updates or modifications of phase shifts and gain values are anticipated or required.

In a further embodiment, the light modulator may comprise an interface configured to receive a set of phase values and optionally gain values. The interface may be configured for wired or wireless communication, receiving the phase and optional gain settings from an external control system, computer, or central building management unit. For example, the interface could utilize communication protocols such as Wi-Fi, Bluetooth, Ethernet, USB, or other standardized digital communication standards. The received set of phase and gain values may then be individually programmed into the plurality of phase shifters, enabling precise electronic control and configuration. Such programmability enables flexibility in adapting to changing RF environmental conditions, optimizing RF reception or transmission patterns, or adjusting energy scavenging efficiency dynamically based on real-time measurements or calculated values.

Programming of the phase shifters may be performed according to several embodiments, as described below. Below we will focus on programming phase values, but the same embodiments may be used to determine and/or program gain values.

In a first embodiment, phase shifters are programmed based on pre-installation characterization of the RF environment. Prior to installation of the glazing unit, directional antennas and RF analysis equipment may be used at the installation site to measure RF propagation paths. These measurements are used to calculate phase shift values specific to the environment in which the glazing unit will be used. Phase shifters within the glazing unit are programmed accordingly during installation, and the programmed values remain unchanged thereafter.

Programming in this embodiment may be implemented either wirelessly or via wired connection. In a wireless configuration, the glazing unit includes a wireless communication module (such as Wi-Fi, Bluetooth, or ZigBee) electrically connected to an internal glazing controller. The internal controller is further connected to each individual phase shifter via dedicated control lines. An external programming device, such as a laptop, smartphone, or central building management system, contains software that receives input from the pre-installation RF measurements or simulation results, calculates the phase shift values, and wirelessly transmits digital instructions to the internal glazing controller. The internal glazing controller receives these instructions and sets the phase shifters accordingly.

In a wired configuration, the glazing unit comprises a physical wired interface port (e.g., USB, Ethernet, RS485) embedded in the glazing unit frame. This interface port is wired to an internal glazing controller, which itself is connected to individual phase shifters. An external computing device or central control system processes input data, determines optimal phase shift values, and transmits digital instructions through the wired connection to the internal glazing controller. The internal glazing controller executes these instructions by adjusting the individual phase shifters.

In a second embodiment, phase shifters are programmed through in-situ measurement and calibration conducted after glazing installation. Temporary RF measurement equipment may be positioned near the glazing, and phase shift values are incrementally adjusted. The RF reception or transmission pattern may be optimized by analyzing the measured RF signal strength or quality. The configuration determined during this calibration is then permanently programmed into the phase shifters. The technical implementation elements of this embodiment are similar to those described for wireless or wired programming in the first embodiment.

In a third embodiment, programming is conducted remotely using an external RF source. After installation, a transmitter positioned at a known, fixed location emits test RF signals toward the glazing unit. The glazing incrementally adjusts the phase shifter settings, evaluating reception strength either internally via integrated RF measurement circuitry or externally through remote measurement equipment. Upon determining a configuration that increases, e.g., maximizes, signal reception, the glazing stores these phase shift values. This embodiment may employ wireless or wired communication or operate autonomously with internal RF measurement circuitry connected to an internal glazing controller.

A fourth embodiment implements automated self-calibration and adaptive programming within the glazing unit itself. Integrated RF measurement circuitry connects directly to an internal microcontroller within the glazing unit. Upon initial power-up or at predefined calibration intervals, the internal microcontroller sweeps phase-shift settings across a range, measuring resultant RF signal strength or quality. The optimal configuration is automatically identified, digitally stored in non-volatile memory, and applied by the internal microcontroller via direct control signals to each phase shifter. This embodiment does not require external communication interfaces, although optional wired or wireless interfaces may be provided, e.g., for diagnostics or external monitoring.

In a fifth embodiment, predictive modeling of RF propagation is employed. Prior to or after glazing installation, computational modeling software operating on an external computing platform simulates RF propagation based on building geometry, material properties, and known RF source locations. Instead of using RF analysis, or possibly in addition thereto, a map of the environment may be used that shows building height and/or RF reception/transmission points, e.g., masts. A preferred angle for reception and/or transmission may be calculated based on the map. Phase shift values, e.g., determined from simulations are programmed into the glazing via wired (e.g. Ethernet, USB) or wireless (e.g. Wi-Fi, Bluetooth) communication to an internal glazing controller, which then applies the calculated settings.

In a sixth, more advanced embodiment, continuous adaptive optimization is provided. The glazing unit remains dynamically programmable following installation. Integrated RF measurement circuitry continuously or periodically monitors RF signal strength or harvested RF energy. An embedded real-time controller analyzes these measurements, dynamically adjusting phase shift values to adapt to changing RF conditions. Adjusted settings are applied internally through local memory and processing. Optional external communication interfaces may also provide diagnostic feedback or external monitoring capabilities.

Optimizing phase values and/or gain values improves RF signal reception, transmission, and RF-based energy harvesting.

### Filters

Various options exist for the filter elements, e.g., the low-pass elements and/or high-pass elements. In an embodiment, the low-pass elements may comprise one or more inductors, and/or the high-pass elements may comprise one or more capacitors. For example, low-pass elements may be implemented using inductors arranged in series with each electrode, e.g., first or second electrode, to effectively allow low-frequency driving signals to pass while attenuating or blocking higher-frequency RF signals. High-pass elements, conversely, may be implemented using capacitors coupled between each electrode, e.g., first or second electrode, and its corresponding phase shifter, thereby permitting RF signals to pass and effectively attenuating or blocking lower-frequency driving signals. Inductors and capacitors may be provided as discrete components or integrated as planar structures on the substrate, for example as planar spiral inductors or interdigitated capacitors. By selecting the inductor and capacitor parameters control over cutoff frequencies is obtained.

The low-frequency driving signal may comprise a low-frequency AC voltage signal or alternatively a low-frequency AC current signal. If the driving signal comprises an AC current, a further bus may be arranged on the first substrate to provide a return path for the current signal. In this configuration, the electrode is connected to the further bus through a respective low-pass element, such as an inductor. This ensures a closed-loop current path for the low-frequency driving signals used to modulate the optical properties of the optical layer. Employing a dedicated current return bus allows heating the substrate by passing a current through the electrode.

The cutoff frequencies of the low-pass and high-pass elements may be selected according to their intended function. For example, the low-pass elements may be configured with cutoff frequencies in a range from 10 Hz to 10 kHz, such that the low-frequency driving signals required for electrophoretic particle modulation within the optical layer can pass efficiently, while RF signals are effectively blocked or attenuated. The high-pass elements may be configured with cutoff frequencies in a range from 100 kHz to 10 MHz to allow the passage of high-frequency RF signals received from or transmitted to the corresponding phase shifters while preventing the low-frequency driving signals from entering the RF signal paths. Selection of appropriate cutoff frequencies ensures proper isolation of the signals, reducing interference and improving overall system reliability and performance. Instead of electrophoretic, dielectrophoretic modulation may be used.

A light modulator according to an embodiment may be mounted on a vehicle, especially a train. The light modulator with integrated directional RF transmitter and/or receiver may be used in the vehicle. The plurality of RF signal processing elements may comprise a phase shifter and may be arranged as a phased array. The light modulator may be configured to control a direction of maximum RF gain of the phased array. The direction of maximum RF gain may be controlled based on received RF signal strength from a geostationary orbital satellite, a low Earth orbital communicator, or a fixed transmitting antenna.

In a further embodiment, the direction of maximum RF gain may be further controlled using positional data obtained from a satellite navigation system associated with the vehicle or train. The satellite navigation system may provide position and orientation data, and the light modulator may be configured to use the data to update the direction of the phased array to maintain communication, e.g., with the geostationary orbital satellite, low Earth orbital communicator, or fixed transmitting antenna.

If the light modulator is mounted on a train, the direction of maximum RF gain remains relatively stable during operation due to the constrained and predominantly linear trajectory of the train. In such scenarios, initial calibration of the phased array direction, optionally combined with periodic updates based on satellite navigation data, may be sufficient to maintain alignment with the intended communication source. The light modulator may store direction parameters or beamforming coefficients, which may be updated at predetermined intervals or upon detection of significant change in orientation or location, such as when the train enters or exits a tunnel, or switches track orientation.

The direction of maximum gain of the phase array RF Transmitter/Receiver may be such that the vehicle can communicate too/from a geostationary orbital satellite or low orbital communicator or fixed transmitting antenna. The direction of maximum gain of the phased array necessary for communication can be calculated from the maximum received RF signal at a given direction of the beam from the phased array. The speed and accuracy of the update of direction of the vehicle, e.g., train, relative to the satellite and/or the orbital can be enhanced with data available from the satellite navigation system associated with the vehicle or train.

The light modulator may be mounted on other vehicles, even with less predictable movement patterns, such as automobiles. In such implementations, frequent or continuous updating of the direction of maximum RF gain may be performed. The light modulator may receive real-time kinematic (RTK) data or inertial measurement unit (IMU) inputs in addition to standard satellite navigation data to track fast-changing heading and orientation. The beamforming algorithm implemented in the control system of the light modulator may dynamically compute updated phase shift settings for the phased array to maintain a communication link with an orbital satellite or fixed antenna, even during abrupt changes in vehicle trajectory.

A light modulator according to an embodiment may be mounted on a vehicle, e.g., a car. The light modulator may be configured to receive movement data indicative of the position and/or orientation of the vehicle. For example, the movement data may comprise one or more of satellite navigation data, real-time kinematic (RTK) data, and inertial measurement unit (IMU) data. The light modulator, e.g., a control system associated therewith, is configured to dynamically update phase shift settings of the phased array based on the movement data. For example, the phase shift settings may be selected to maintain a communication link with an orbital satellite or a fixed antenna during changes in vehicle trajectory.

**Figure 5a** schematically shows an example of an embodiment of a light modulator method 500. Method 500 is a light modulator method for reception and/or transmission of radio frequency signals using a light modulator.

The light modulator is according to an embodiment, e.g., according to any one of figures 1a-4c.

Method 500 comprises
- providing (510) a low-frequency driving signal to the first driving bus to control the optical layer, the light modulator being configured to apply the low-frequency driving signal to the first electrodes via the low-pass elements, thereby generating an electric field in the optical layer that induces electric, e.g., electrophoretic or dielectrophoretic, modulation of the particles' position, causing modulation of optical properties of the light modulator,
- reception and/or transmission (520) of radio frequency signals through the plurality of RF signal processing elements.

Method 500 may be implemented on a light modulator according to an embodiment. Method 500 may be implemented on a computer connected to a light modulator according to an embodiment.

**Figure 5b** schematically shows an example of an embodiment of a method 550 of configuring a light modulator. Method 550 comprises
- providing (560) a light modulator according to an embodiment; optionally also connecting a computer to a light modulator.
- optimizing (570) phase shifts for the plurality of phase shifters of the light modulator to optimize RF reception and/or RF transmission,
- programming (580) the plurality of phase shifters of the light modulator through the computer, setting for each phase shifter the particular phase shift obtained from the optimization.

Method 500 may be implemented on a light modulator according to an embodiment. Method 500 may be implemented on a computer connected to a light modulator according to an embodiment. The optimizing and programming may be performed by the computer.

Optimizing phase shifts in a phased array antenna allows directing the beam toward a specific angle, thereby enhancing RF signal reception or transmission in that direction. This process, known as beamforming, involves calculating and applying precise phase adjustments to each antenna element to achieve constructive interference in the desired direction and destructive interference elsewhere.

Implementing these phase shifts can be achieved through various methods, including analog phase shifters, digital phase shifters, or hybrid beamforming techniques.

See the paper "Hybrid Beamforming for Large Antenna Arrays with Phase Shifter Selection", by Sohail Payami, Mir Ghoraishi, and Mehrdad Dianati for more details.

Substrates are disclosed, e.g., for use in a light modulator, in particular, dynamic glazing. The substrate is transparent, and at least one electrode is applied to a side of the substrate, the electrode extending in a pattern across the side of the first substrate. At least one of the first and second substrates is transparent. In a glazing application, both substrates are transparent. In other applications, e.g., a display, one of the two substrates may be opaque. The electrode may comprise a non-transparent material, in particular, reflective metal.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

RF antenna beam steering may be integrated into various types of light modulators. For example, an electrode in a region of a plurality of regions on a substrate of the light modulator may be connected to a first driving bus through a low-pass element, and connected through a high-pass element to a corresponding phase shifter of a plurality of phase shifters. The optical properties of the light modulator may be controlled with low frequency control signals, while the plurality of phase shifters may be individually configured with an individual phase shift to perform RF antenna beam steering.

Figures 6a-9c provide various examples of the electrode system on the first and second substrate and how they may be implemented or used in a light modulator.

Some of the known light modulators which may be provided with RF antenna beam steering are based on the electrophoretic principle. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field, enabling electrophoretic control of particles.

Electrophoretic light modulators are explained more extensively herein and are used as the motivating example. In an embodiment, a light modulator comprises a first substrate and a second substrate. At least one of the first and second substrates may be according to an embodiment and may be provided with RF antenna beam steering. For example, the first and second substrates may be arranged with inner sides opposite to each other, using a substrate according to an embodiment. An optical layer is arranged between the first and second substrates. The electrode is arranged to modulate an electric field in the optical layer. The optical layer comprises a fluid, e.g., liquid, comprising particles, wherein the particles are electrically charged or chargeable. The fluid may be a continuous fluid. The fluid may be arranged so that particles are free to flow throughout the optical layer. In an embodiment, the optical layer extends up to the edges of the first and second substrates. Instead of electrophoretic, dielectrophoretic modulation may be used.

The particles may be moved under the control of the electric field. For example, a controller may be configured to apply an electric potential to the electrode to obtain an electric field at the electrode, providing electrophoretic movement of the particles towards or away from one of the at least one electrode, causing modulation of the optical properties of the light modulator. For example, optical properties may include a transition between a high-transparent state and a low-transparent state or vice versa. Note that a transition may also alter thermal properties of the light modulator.

Below a number of known light modulators are reviewed, showing some of the options in technology and electrodes. These known light modulators can advantageously be combined with RF antenna beam steering. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. These electrophoretic display devices may be provided with RF antenna beam steering.

US patent 10921678 with title 'Electrophoretic device', included herein by reference, shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode and a second substrate opposite the first substrate, with an accumulation electrode. The first substrate and the second substrate enclose a pixel with a fluid and particles. In use, an applied electric field to the field electrode and the accumulation electrode provides movement of the particles from the field electrode to the accumulation electrode and vice versa. Any of these cited electrophoretic light modulators may be adapted by including RF antenna beam steering according to an embodiment.

US patent 8054535B2 (included herein by reference) and US patent 8384659b2 (included herein by reference) show alternative examples of electrophoretic light modulators in which one of two substrates has two patterned electrodes.

The paper "Reversible Metal Electrodeposition Devices: An Emerging Approach to Effective Light Modulation and Thermal Management," included by reference, also shows a substrate on which a patterned electrode is applied.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130 °C for 15 minutes. On top of these silver grids, one or two layers of PEDOT:PSS SV3 were posteriorly printed by screen printing.

In an application of the light modulator for glazing both substrates are typically transparent. In other applications, e.g., in television, e-readers, etc., only one substrate may be transparent.

**Figure 6b** schematically shows an example of an embodiment of a substrate. The substrate is particularly useful for use in a light modulator, e.g., of a kind described herein. Across the substrate an electrode system is applied in the form of multiple interdigitated electrodes. Shown in Figure 6b are two interdigitated electrodes.

The motivating example use of the substrate is in an electrophoretic light modulator. Typically, an electrophoretic light modulator comprises at least two substrates, each having at least two electrodes per region at each of the substrates; this is not necessary though. For example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode, causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples include the dielectrophoretic effect and the electrophoretic effect. For example, optical modulation may comprise the modulation of particles arranged in the optical layer. The number of electrodes may range from one on a single substrate to multiple electrodes on one or both substrates.

The optical layer arranged between the first and second substrates may comprise particles, e.g., suspended in a fluid. The controller may be configured to apply an electric potential to the electrodes, causing the particles to move, thus modulating the optical properties of the light modulator.

In an embodiment, the particles comprise electrically charged or chargeable particles, and the controller is configured to apply an electric potential to the electrode to obtain an electric field providing electrophoretic movement of the particles. In an embodiment, the electric field is arranged between at least two electrodes per region arranged on the same substrate or arranged on different substrates.

In an embodiment, the particles comprise dielectric particles, and the controller is configured to apply an electric potential to the electrode to apply an electric field gradient to the particles, enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 6b are two electrodes per region on the same surface. The two electrodes are indicated in figure 6b in two different dashing styles. In Figure 6b the substrate is portioned into four regions, each shown with a single building block. Multiple building blocks per region is possible. The electrodes in each region are connected with a phase shifter (not separately shown in figure 6b), the outputs of which are combined into a combined signal. Alternatively, the electrodes in each region are connected with a phase shifter (not separately shown in figure 6b), the outputs of which are transmitted by the electrodes in the region.

Each first electrode may be controlled by a first driving bus, e.g., bus 610. Each second electrode may be controlled by a second driving bus, e.g., bus 620.

There could be more than two electrodes per region on the same side of the substrate, e.g., to facilitate more fine-grained control of voltage differences across the substrate. The electrodes are applied to a same side of the substrate. Applying electrodes to a substrate may be done lithographically, e.g., using a mask representing the electrode(s) pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes per region arranged at their inner surface. Though, as mentioned, multiple electrodes per region on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes per region, the second substrate may comprise one electrode. For example, the first substrate may comprise two electrodes per region, the second substrate may comprise two electrodes per region. For example, the first substrate may comprise more than two electrodes per region, the second substrate may comprise two or more electrodes.

Light modulators, wherein each substrate comprises two electrodes per region are used as a motivating example, though. Designs of substrates featuring two electrodes per region may be adapted to have a single electrode, e.g., by connecting the two electrodes, or by removing one of the electrodes. Adapting a substrate in such a manner may make it suitable for use in different technologies.

Each of the multiple electrodes are arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 6b the first electrode comprises main lines 611-614, and the second electrode comprises main lines 621-624. The electrodes are each driven by its driving bus. Figure 6b shows two driving buses: driving bus 610 and driving bus 620. The electrodes also serve to connect the main lines together. For example, in figure 6b, the driving bus 610 drives and connects main lines 611-614; and the driving bus 620 drives and connects main lines 621-624. There can be more main lines than the four shown in this example. The use of main lines is advantageous as it reduces the length of the electrodes, but it is not necessary. A design using only one main line per electrode is not impossible, though having multiple is advantageous.

The driving buses may be adapted to form a contact area to enable electrical connection to at least the one or more driving electrodes applied on the first substrate, e.g., a connection from outside the light modulator. This is not necessary, and a separate contact area, e.g., additional to driving buses 610 and 620 may be provided as in an embodiment.

The multiple main lines of the first and second electrodes are arranged alternatingly with respect to each other on the substrate.

In this example, there are no other connections between the main lines of an electrode than through the common driving bus. In an embodiment, an electrode comprises a mesh electrode, that is, additional electrical connection may be added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 600 is in smart glazing, e.g., a light modulator, which may be applied in domestic housing, offices, greenhouses, cars, and the like. The level of transparency or reflectivity of the smart glazing can be adapted electrically. For example, in smart glazing, two substrates such as substrate 600 would be stacked so that the sides on which the two electrodes are applied face each other. A fluid with particles is enclosed between the two substrates. Smart-glazing embodiments are further discussed below. In an embodiment, electrodes, e.g., two or more electrodes, are applied to one surface of each substrate. There could also be one, two, or more electrodes on the other surface of substrate 600, e.g., to facilitate stacking of three or more substrates.

Some embodiments below show examples of modulating a transparency or reflectivity level. Light modulators may be adapted for other optical effects. For example, if desired, embodiments could be modified to provide different levels of translucency instead of different levels of transparency. If desired, the type of particle used in an embodiment can be varied, e.g., to particles that differ in which wavelengths they absorb or reflect and how specular or diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets, the electric field at any part of the substrate can be controlled as two opposite electrodes border the part from two opposing sides.

Interestingly, the pattern in which the electrodes stretch across the substrate may be created by multiple repeated building blocks. Shown in Figure 6b, the electrodes on substrate 600 show four blocks: blocks 641, 642, 643, and 644, which are all substantially the same. The number of building blocks may be larger than four. The building blocks repeat in both directions across the substrate, e.g., a first direction 691, e.g., an x-direction, shown horizontally in the figure, and a second direction 692, e.g., a y-direction, shown vertically in the figure. Using building blocks is advantageous as it allows manufacture using a stepper machine; using building blocks is not necessary.

For example, **Figure 6a** schematically shows an example of an embodiment of a building block 640. Building block 640 comprises multiple interdigitated electrodes extending in at least 2 directions across the building block. Shown in Figure 6a are four electrodes: electrodes 631-634. When the building blocks are repeated across a substrate in two directions, the electrodes in the building block will form the electrodes, e.g., form the multiple main lines of the electrodes. Note that the building blocks are typically connected in a substrate-electrode design tool. Typically, a building block comprises more than four electrode lines. For example, in a range of embodiments, between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The electrodes that are formed by repeating building blocks are connected to the driving buses. Typically, electrode lines in a building block are connected to electrode lines in neighboring blocks by merging corresponding electrode lines; this is not necessary, though. Between repeated building blocks, connection zones can be inserted that connect corresponding electrode lines.

This step can connect multiple main lines together, thus forming a single electrode. Figure 6b shows two connecting zones 619 and 629, in which the main lines belonging to the same electrode are connected to driving bus 610 and driving bus 620, respectively.

The electrodes that are shown in Figure 6a are alternately dashed in the same dashing style as in Figure 6b. Indeed, it happens to be the case in this example that a particular electrode of the building block of Figure 6a will always end up in the first electrode or in the second electrode, e.g., as indicated in this case by the dashing style. This is, however, not necessarily the case. An electrode in a building block may end up as part of the first electrode or as part of the second electrode. This can change, e.g., as a result of the parity of the number of electrodes in the building block, the pattern in which the building blocks are repeated, etc.

For example, a particular pattern of repeated building blocks may be used for a light modulator with two electrodes per region, in which one might assign alternating main lines to the two electrodes. However, the same pattern of repeated building blocks may be used for a light modulator with three electrodes, in which one might assign every next set of three main lines to the three electrodes.

Furthermore, the building block shown in Figure 6a is square, but this is also not needed. For example, a building block may be rectangular. In an embodiment, building block shape(s) could form a so-called tessellation. For example, a building block may be a triangle, a hexagon, or even a combination of plane-filling shapes.

As stated, Figures 1a and 1b are schematic. This is especially the case for the depiction of the electrodes. An electrode as shown in Figure 6a is straight; however, in an embodiment, an electrode on the building block is more convoluted, e.g., curved. By adapting the shape of the electrodes, undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates are according to an embodiment. The dimmable mirror may be electrophoretic. Typically, each substrate has two electrodes per region, but this is not necessary.

**Figure 6c** schematically shows an example of an embodiment of a substrate 601. In Figure 6c, a building block has been copied multiple times.

Building block 651 has been mirrored in the x-direction to form building block 661. Building block 661 has been arranged directly at the bottom of building block 651. Building block 651 has been mirrored in the y-direction to form building block 652. Building block 652 has been arranged directly to the right of building block 651. Building block 651 has been mirrored in both the x-direction and the y-direction to form building block 662. For example, the mirroring may have a mirroring axis along a side of the building block.

By mirroring the building block, it is ensured that driving buses of the same electrode end up next to each other on the substrate.

**Figure 6d** schematically shows an example of an embodiment of a substrate 602. In substrate 602, the building block is repeated across the substrate, in a different manner. Building block 651 has been mirrored in the x-direction to form building block 661. Building block 661 has been arranged directly at the bottom of building block 651. Building block 651 has been point reflected, e.g., rotated 180 degrees, to form building block 662. Building block 662 has been arranged directly to the right of building block 651. Building block 662 has been mirrored in the x-direction to form building block 652.

It is also possible to arrange building blocks without mirroring the pattern.

Each of the regions shown in figures 6c and 6d may be a region, however, multiple building blocks may be combined to in a region.

Note that in an embodiment, e.g., as shown in figures 6c and 6d a driving bus may have various extensions to provide power to different regions.

Spacers may be added as needed, e.g., to support large-sized light modulators. Spacers are small structures placed around the substrate to keep the two substrates at a constant distance. A spacer may be a dielectric, e.g., formed from the same material as one of the substrates.

**Figures 7a-7f** schematically show examples of interdigitated electrodes. These may be embodied on a substrate with two electrodes per region, e.g., by alternatingly connected electrodes. Figures 7a-7d may also be embodied on a substrate with multiple electrodes, e.g., by connecting in sequences of 3 or 4 or more electrodes of the lines shown.

Figures 7e and 7f show designs with two electrodes. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular, if these designs are connected to two driving buses, no crossing electrodes are needed. When more than two electrodes are used or if more complicated electrode patterns are used, then crossing of the electrodes may be used, or may even become necessary. Such crossings are possible however, for example, at the location where two electrode lines cross, a dielectric material may be arranged between the electrodes. For example, such an insulator may be deposited at the crossing location. For example, a first electrode may be in a first plane of the substrate and a second electrode may be in a second plane of the substrate.

Two substrates according to an embodiment may be combined to form a light modulator. The light modulator is particularly suited for glazing. An exemplary embodiment of a light modulator is shown below.

The designs shown may be applied in one or more building blocks.

**Figure 8a** schematically shows an embodiment of a light modulator 10, which may be applied in smart glazing.

Reference is made to patent application PCT/EP2020/052379, which is included herein by reference; this application comprises advantageous designs for light modulators, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite each other. On an inner side of first substrate 11, at least two electrodes are applied in multiple regions. On an inner side of second substrate 12, at least two electrodes are applied in multiple regions. One or more of substrates 11 and 12 may be provided with one or more contact areas to enable electrical connection to at least the one or more electrodes applied on the substrate(s).

Each region has a phase shifter as set out herein. Figures 8a and 8b do not separately show the phase shifters and the multiple regions.

A fluid 15 is provided between said substrates. The fluid comprises particles 30, e.g., nanoparticles and/or microparticles, wherein the particles are electrically charged or chargeable. For example, particles may carry a charge on their surface intrinsically. For example, the particle may be surrounded by a charged molecule. The fluid may be a liquid.

The electrodes are arranged to drive particles 30 to move toward or away from electrodes, depending on the electric field applied. The optical properties, in particular the transparency or reflectivity of the light modulator, depend on the location of particles 30 in the fluid. For example, a connection may be provided for applying an electric field to the electrodes.

In an example, substrate 11 and substrate 12 may be optically transparent outside of the electrodes, typically >95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof. In an exemplary embodiment of the light modulator, a substrate material is selected from glass, and polymer.

In another example, one substrate, such as a bottom substrate 12, may be reflective or partially reflective, while top substrate 11 is transparent. The optical properties, in particular the reflectivity of the light modulator, depend on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrates is typically smaller than 30 µm, such as 15 µm. In an exemplary embodiment of the light modulator a distance between the first and second substrates is smaller than 500 µm, preferably smaller than 200 µm, preferably less than 100 µm, even more preferably less than 50 µm, such as less than 30 µm.

In an example, the modulator may be provided in a flexible polymer, and the remainder of the device may be provided in glass. The glass may be rigid glass or flexible glass. If required, a protective layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example, the device may be provided in at least one flexible polymer. As such, the modulator may be attached to any surface, such as by using an adhesive.

Particles 30 may be adapted to absorb light and thereby preventing certain wavelengths from passing through. Particles 30 may reflect light; for example, the reflecting may be specular, diffusive, or in between. A particle may absorb some wavelengths and reflect others. Particles may also or instead emit light, e.g., using phosphorescence, fluorescence, or the like. Even the fluid may emit light, with its emittance modulated by changing the location of particles.

In an exemplary embodiment of the light modulator, a size of the nanoparticles is from 20-1000 nm, preferably 20-300 nm, more preferably smaller than 200 nm. In an exemplary embodiment of the light modulator, the nanoparticles or microparticles may comprise a coating on a pigment, and preferably comprise a core. In an exemplary embodiment of the light modulator, the coating of the particles is made from a material selected from conducting and semiconducting materials.

In an exemplary embodiment of the light modulator, the particles are adapted to absorb light with a wavelength of 10 nm-1 mm, such as 400-800 nm, 700 nm -1 µm, and 10-400 nm, and/or are adapted to absorb a part of the light within a wavelength-range falling within 10 nm-1 mm (filter), and combinations thereof.

In an exemplary embodiment of the light modulator, the particles are electrically charged or chargeable. For example, a charge on the particles may be 0.1e to 10e per particle (5*10⁻⁷-0.1 C/m²).

In an exemplary embodiment of the light modulator, the fluid is present in an amount of 1-1000 g/m², preferably 2-75 g/m², more preferably 20-50 g/m², such as 30-40 g/m². It is an advantage that of the present layout that less fluid, and likewise fewer particles, can be used.

In an exemplary embodiment of the light modulator, the particles are present in an amount of 0.01-70 g/m², preferably 0.02-10 g/m², such as 0.1 -3 g/m².

In an exemplary embodiment of the light modulator, the particles have a color selected from cyan, magenta, and yellow, and from black and white, and combinations thereof.

The light modulator can also be configured to only, or primarily, modulate non-visible light such as UV or near-IR, e.g., respectively in the range of about 10 nm-380 nm, and in the range of about 750 nm - 1 µm.

In an exemplary embodiment of the light modulator, the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator, the fluid has a relative permittivity εr of less than 100, preferably less than 10, such as less than 5. In an exemplary embodiment of the light modulator, fluid 15 has a dynamic viscosity of above 10 mPa.s.

The electrodes may be in fluidic contact with the fluid. The fluid may be in direct contact with the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 nΩm (at 273K; for comparison, typically used ITO has 105 nΩm), which is similar to an electrical conductivity >1*10⁷ S/m at 20°C).

In an embodiment of the light modulator, electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electric field to the electrodes may be provided, wherein the applied electric field to the electrodes provides movement of the nano- and microparticles from a first electrode to a second electrode and vice versa. A connection for applying an electric field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller 16. The controller 16 may be connected to contact areas of the light modulator.

Controller 16 may be configured for controlling the optical layer, e.g., to receive a control signal instructing the controller to control the optical layer by applying a signal on the driving bus and/or to further driving buses. In an embodiment, controller 16 is arranged to obtain electrical power from an antenna signal. The power may be used for driving, at least in part, the electrodes on the first and second substrates.

An optional energy storage 19 may be connected to controller 16 and/or to light modulator 10 to store energy scavenged from impinging RF radiation.

Light modulator 10 may comprise one or more segments, with a segment being a single optically switchable entity, that may vary in size. The substrates enclose a volume, which may be a segment, at least partly.

The present device may comprise a driver circuit for changing the appearance of (individual) segments by applying an electric field. As such also the appearance of the light modulator, or one or more parts thereof, may be changed. For example, a segment may have an area of at least 1 mm². The present design allows for stacking to allow for more colors; e.g., for full color applications a stack of two or three modulators could provide most or all colors, respectively.

Having one or more segments allows the light modulator to be controlled locally; which is advantageous for some applications, but not necessary. For smart glazing, a light modulator may be used with or without segments. For example, when applied in smart glazing, transparency or reflectivity may be controlled locally, e.g., to block a sun-patch without reducing transparency or reflectivity across the entire window. Segments may be relatively large, e.g., having a diameter of at least 1 mm, or at least 1 cm, etc.

In an exemplary embodiment of the light modulator, the electrodes on a substrate are aligned with the electrodes on the opposite substrate. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator. On the other hand, when selecting a light modulator based on more criteria than the range of transparency or reflectivity, etc., it may be better not to align or not fully align the two substrates. Light modulators can be stacked. For example, two stacked light modulators can be made from three substrates, wherein the middle one has electrodes on both its surfaces. In an embodiment of the light modulator, optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 8b** schematically shows an example of an embodiment of a light modulator 40. Light modulator 40 is similar to light modulator 10, except that it comprises multiple optical layers; in the example as shown, two optical layers. There may be more than two optical layers. Each optical layer is arranged between two substrates. Light modulator 40 can be regarded as a stack of two-substrate light modulators as in Figure 8a. As shown, light modulator 40 comprises three substrates: first substrate 41, second substrate 42, and third substrate 43. An optical layer is arranged between substrates 41 and 42, and another optical layer between substrates 42 and 43. The optical layers may be similar to those in light modulator 10. A controller 46 is configured to control electrical current on the electrodes of the substrates. For example, in Figure 8b, controller 46 may be electrically connected to at least 4 times 2, equaling 8 electrodes per region.

An optional energy storage 49 may be connected to controller 46 and/or to light modulator 40 to store energy scavenged from impinging RF radiation.

Interestingly, the particles in the multiple optical layers may be different so that the multiple layers may be used to control additional optical properties of the light modulator. For example, particles in different optical layers may absorb or reflect at different wavelengths, e.g., they may have a different color. This can be used to create different colors and/or different color intensities on the panel by controller 46. For example, a four-substrate panel may have three optical layers with different color particles, e.g., cyan, yellow, and magenta. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with a contact area for electrical connection to the electrodes, e.g., for control by controller 46.

Light modulator 40 may be provided with spacers, e.g., on first substrate 41 facing second substrate 42, on second substrate 42 facing first substrate 41, on second substrate 42 facing third substrate 43, and/or on third substrate 43 facing second substrate 42. Light modulator 40 may be provided with RF antenna beam steering.

Smart glazing can also be used in other glazing applications, especially, where the amount of incident light is variable, e.g., buildings, offices, houses, greenhouses, and skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40, may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrates, applying an alternating current between a first electrode on the first substrate and a first electrode on the second substrate, and/or between a second electrode on the first substrate and a second electrode on the second substrate.

The light modulator may also demonstrate multiple intermediate transparency states between the 2 optical states. For example, the light modulator may support a grayscale of transparency states between a maximally transparent and a maximally opaque state. The same applies for other optical properties, e.g., intermediate reflective properties.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first and second substrates.

A driving signal applied to the electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and second substrates.

**Figure 8c** schematically shows an example of an embodiment of a building. Figure 8c shows a map 800, e.g., a top view of the building. Shown are buildings 811 and 812. A road 820 going between the two buildings is also shown.

At 830 a glazing unit according to an embodiment is installed. The glazing unit is arranged for reception, e.g., RF scavenging, though transmission would also be possible. As can be seen from the map, glazing unit 830 is shielded from a good part of incident radiation by buildings 811 and 812. However, one direction of radiation, indicated at 840, can still reach glazing unit 830 unimpeded.

Accordingly, the glazing unit 830 can be programmed to preferentially receive RF radiation from direction 840. The same holds to a transmitting embodiment.

**Figures 9a-9b** schematically show a side view of an embodiment of a light modulator 10 in use. In these figures only the electrodes are shown. Shown are a first substrate 11, and a second substrate 12. Between the substrates is an optical layer 17 comprising a fluid 15 comprising particles 30. Electrodes 13 are applied on a surface of first substrate 11. Electrodes 14 are applied on a surface of second substrate 12. The electrodes may comprise electrodes 13a, 13b and electrodes 14a, 14b respectively, as shown in Figure 6b.

Electrodes 13a, 13b and electrodes 14a, 14b are each connected to a different driving bus through a corresponding low-pass element (not separately shown). Electrodes 13a, 13b are connected to a phase shifter, possibly to the same phase shifter, through a high-pass element. Electrodes 14a, 14b are connected to a phase shifter, possibly to the same phase shifter, through a high-pass element. The phase shifter or high-pass elements are not separately shown.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: at least two for each substrate. More electrodes may be used and connected to the controller; for example, more than 2 electrodes may be used on a substrate to better fine-tune grayscale adjustments and driving to non-transparent or reflective state. Multiple electrodes may also be used to support multiple segments on the substrate.

**Figure 9a** shows the light modulator without an electric field being applied. No electric force is yet applied on particles 30 suspended in fluid 15, in Figure 9a.

In the configuration shown in Figure 9a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastic substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to the substrate that is higher or lower on the page. The same substrates could also be referred to, e.g., as the front substrate and back substrate, since in a glazing application, the substrates would be aligned vertically rather than horizontally.

**Figure 9b** shows the light modulator wherein, at an instance P1, a potential +V1 is applied to each microwire electrode on the top substrate, while a negative voltage, -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrates are transparent, the transparency of light modulator 10 will increase. Likewise, if, e.g., the top substrate is transparent and the bottom substrate is reflective, the reflectivity of light modulator 10 will increase. If the solution contains positively charged particles, they will flow to the vicinity of the electrodes of the bottom substrate, where those particles will substantially align with the bottom electrodes.

A similar transparency can be achieved when in a second instance, P2, of the on-state, the voltages of the top electrodes and bottom electrodes are reversed in contrast to the instance of P1. In the instance P2, the voltage of each electrode on the top substrate is now supplied with a negative potential -V1 while the voltages of the aligned electrodes of the bottom substrate are supplied with a positive potential. This state is similar to the state shown in figure 9b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 9b (and a negative potential on electrodes 14), and a positive potential at electrodes at the bottom substrate, e.g., as shown as electrodes 14 in figure 9b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrodes on the opposite substrate, where they deposit. By applying a waveform, the direction of copper ion transport is frequently reversed, thus reducing corrosion damage. Between the two instances P1 and P2, the corrosion current between the two substrates is balanced or substantially, e.g., >95%, balanced, e.g., as corrosion rate of an electrode of the top plate occurs, there is a balancing deposition of copper on the bottom electrode between each instance of time, P1, and vice versa in instance P2. Therefore, the particles are transitioning or migrating continuously between top and bottom electrodes, and the light modulator or smart window is always in the on-state while the dynamic electrolysis current between the top and bottom electrodes is constant, thus there is no or a negligible net loss of electrode material on the top and bottom substrates.

**Figure 9c** shows how a state of decreased transparency or increased reflectivity can be obtained. An alternating voltage is applied on the same substrate. For example, in an embodiment, a potential +V2 is applied to a first electrode and the next immediate neighboring electrode has an opposite potential -V2 etc., as shown in fig. 9c. This can be obtained by applying the potential +V2 to electrode 13a and the opposite potential -V2 to electrode 13b. On the opposite substrate, the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 9c, wherein four electrodes are indicated with the reference numbers 13a, 13b, 14a, and 14b, and the rest of the electrodes continue to alternate.

By using this AC drive cycle between top and bottom substrates, diagonal and lateral electric fields are generated between the two substrates thereby causing haphazard diffusion of the particles, thereby creating the closed state of the light modulator. As a result of this configuration, the particles migrate diagonally and laterally between the top and bottom substrates and diffusion of particles into the visible aperture of the light modulator contributes to the closed, opaque state of the light modulator.

As for the transparent state shown in figure 9b, a waveform may be applied to the electrodes, e.g., so that electrodes that are shown in figure 9b with a positive potential become negative and vice versa. As in figure 9b, applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 6a, 6b, 7a-7f, etc.

The extent to which transparency or reflectivity is increased or decreased in figures 9b and 9c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1 mm. Note that no pixelation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent offset in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less responsive to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with different resistance will give rise to a different electric field. For example, ITO will have a smaller electric field, even though driven with the same voltage.

An embodiment of a method of modulating light comprises applying an electric potential to multiple electrodes applied to two opposing substrates according to an embodiment to obtain an electric field between the multiple electrodes providing electrophoretic movement of the particles towards or from one of the multiple electrodes causing modulation of light shining through the substrates, wherein the two opposing substrates are as in an embodiment.

Light modulator 10 may be provided with spacers, e.g., on first substrate 11 and/or on second substrate 12, facing the optical layer. Light modulator 10 may be provided with RF antenna beam steering.

Various modes of operation are supported by an embodiment of a four-electrode light modulator system.

### Horizontal drive

Horizontal drive is a mode in which lateral electric fields are created along the substrate. The light modulator may apply an alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a grayscale

The light modulator drive system may apply 0 voltage on the electrodes most of the time, but if the grayscale is dropping due to the particles dispersing, then briefly the electrodes and may be driven as in vertical drive.

In all three modes, the driving may use DC or AC signals. Preferably, AC signals are used.

Many different ways of executing the method are possible, as will be apparent to a person skilled in the art. For example, the steps can be performed in the shown order, but the order of the steps can be varied, or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing one or more computers, e.g., a processor system, to perform an embodiment of method 500 and/or 550. The software may include only those steps taken by a particular sub-entity of the system. The software and/or other data according to an embodiment may be stored in a non-transitory storage medium, such as a hard disk, a floppy disk, a memory, an optical disc, read-only memory, random access memory, CD-ROMs, magnetic tape, optical data storage devices, etc. Transitory signals and carrier waves are excluded from non-transitory media.

The software may be sent as a transitory signal along a wire or wirelessly, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, code intermediate between source and object code, such as partially compiled code, or in any other form suitable for use in the implementation of an embodiment of the method. An embodiment relating to a computer program product comprises computer-executable instructions corresponding to each of the processing steps of at least one of the methods set forth. These instructions may be subdivided into subroutines and/or be stored in one or more files that may be linked statically or dynamically. Another embodiment relating to a computer program product comprises computer-executable instructions corresponding to each of the devices, units, and/or parts of at least one of the systems and/or products set forth.

**Figure 10a** shows a computer-readable medium 1000 having a writable part 1010, and a computer-readable medium 1001 also having a writable part. Computer-readable medium 1000 is shown in the form of an optically readable medium. Computer-readable medium 1001 is shown in the form of an electronic memory, in this case a memory card. Computer-readable mediums 1000 and 1001 may store data 1020 wherein the data may indicate instructions which, when executed by a processor system, cause a processor system to perform an embodiment of a light modulator method and/or a light modulator configuration method, according to an embodiment. The computer program 1020 may be embodied on the computer-readable medium 1000 as physical marks or by magnetization of the computer-readable medium 1000. However, any other suitable embodiment is conceivable as well. Furthermore, it will be appreciated that, although the computer-readable medium 1000 is shown here as an optical disc, the computer-readable medium 1000 may be any suitable computer-readable medium, such as a hard disk, solid-state memory, flash memory, etc., and may be non-recordable or recordable. The computer program 1020 comprises instructions for causing a processor system to perform an embodiment of said light modulator method and/or light modulator configuration method.

**Figure 10b** shows a schematic representation of a processor system 1140 according to an embodiment. The processor system comprises one or more integrated circuits 1110. The architecture of the one or more integrated circuits 1110 is schematically shown in Figure 10b. Integrated circuits 1110 comprises a processing unit 1120, e.g., a processor, a CPU, for running computer program components to execute a method according to an embodiment and/or implement its modules or units. Integrated circuits 1110 comprises a memory 1122 for storing programming code, data, etc. Part of memory 1122 may be read-only. Integrated circuits 1110 may comprise a communication element 1126, e.g., an antenna, connectors, or both, and the like. Integrated circuits 1110 may comprise a dedicated integrated circuit 1124 for performing part or all of the processing defined in the method. Processing unit 1120, memory 1122, dedicated IC 1124 and communication element 1126 may be connected to each other via an interconnect 1130, such as a bus. The processor system 1140 may be arranged for contact and/or contactless communication, using an antenna and/or connectors, respectively.

For example, in an embodiment, processor system 1140, e.g., the light modulator and/or light modulator configuration device, may comprise a processor circuit and a memory circuit, the processor being arranged to execute software stored in the memory circuit. The memory circuit may be a ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processing unit 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A light modulator (100) configured for reception and/or transmission of radio frequency signals, the light modulator comprising
- a first substrate (141; 621) and a second substrate (142; 622), arranged parallel to each other in the light modulator, a first driving bus being arranged on the first substrate,
- a plurality of regions being defined on the first substrate, wherein in each region a first electrode is arranged on the first substrate, which first electrode is connected to the first driving bus through a low-pass element, the first electrode of each region of the plurality of regions is connected through a high-pass element to a corresponding RF signal processing element of a plurality of RF signal processing elements, wherein the first electrode is adapted to serve as an antenna,
- an optical layer (143) arranged between the first substrate and second substrate, charged or chargeable particles being in fluidic suspension in the optical layer (143), the first driving bus being configured to receive a low-frequency driving signal, which is applied to the first electrodes via the low-pass elements, thereby generating an electric field in the optical layer that induces electric modulation of the particles' position, causing modulation of optical properties of the light modulator, wherein
- the light modulator is configured for reception and/or transmission of radio frequency signals through the plurality of RF signal processing elements.

2. The light modulator of Claim 1, wherein the RF signal processing elements are phase shifters, and wherein
- the light modulator is configured to combine output signals of the plurality of phase shifters into a combined RF output signal, and/or wherein an RF input signal is provided to the plurality of phase shifters.

3. The light modulator of Claim 2, wherein each phase shifter of the plurality of phase shifters is individually programmable for a particular phase shift and optionally for a particular gain, one or more control lines being arranged on the first substrate connecting to each phase shifter to enable the individual programming.

4. The light modulator of Claim 3, wherein the plurality of phase shifters is programmed to achieve a directional reception and/or transmission corresponding to a specified direction of maximum gain.

5. The light modulator according to any one of Claims 3-4, wherein each of the plurality of phase shifters is configured to provide an adjustable phase shift to an RF signal received from its corresponding first electrode, each phase shifter comprising an input terminal to receive the RF signal, an adjustable phase element configured to modulate the phase of the RF signal in response to the control line, and an output terminal to transmit the RF signal with the adjusted phase shift.

6. The light modulator of Claim 1, wherein the RF signal processing elements comprise an amplifier and are configured for multiple-input multiple-output (MIMO) operation.

7. The light modulator of Claim 6, wherein each of the plurality of RF signal processing elements is configured to independently receive a respective RF input signal or to generate a respective RF output signal, the RF input signals or RF output signals being processed independently without analog combining or distribution among the RF signal processing elements.

8. The light modulator according to any one of the preceding claims, wherein
- a second driving bus is arranged on the first substrate,
- in each region a second electrode is arranged on the first substrate, which second electrode is connected to the second driving bus through a low-pass element, the second electrode of each region of the plurality of regions is connected through a high-pass element to the corresponding RF signal processing element of a plurality of RF signal processing elements, wherein the second electrode is adapted to serve as an antenna, the first electrode and the second electrode being interdigitated.

9. The light modulator according to any one of the preceding claims, wherein the low-pass elements comprise an inductor and/or the high-pass elements comprise a capacitor.

10. The light modulator according to any one of the preceding claims, wherein
- the low-frequency driving signal comprises a low-frequency AC voltage signal, or
- the low-frequency driving signal comprises a low-frequency AC current signal, wherein a further bus is arranged on the first substrate to provide a return path for the current signal, and wherein each first electrode is connected to the further bus through a low-pass element.

11. The light modulator according to any one of the preceding claims, wherein
- a first driving bus is arranged on the second substrate,
- a first electrode is arranged on the second substrate, which first electrode is connected to the first driving bus through a low-pass element,
- the first electrode is connected through a high-pass element to form a ground signal.

12. The light modulator according to any one of the preceding claims, wherein
- the low-pass elements are configured with cutoff frequencies in a range from 10 Hz to 10 kHz to pass the low-frequency driving signal for control in the optical layer, and/or
- the high-pass elements are configured with cutoff frequencies in a range from 100 kHz to 10 MHz to block the low-frequency driving signal while passing the high-frequency RF signals.

13. The light modulator according to any one of the preceding claims, wherein the first electrodes are applied to the first substrate using a stepped patterning process, wherein a predefined electrode pattern is repeatedly applied multiple times across the first substrate to form the plurality of regions, the predefined region comprising one or more copies of the predefined electrode pattern.

14. The light modulator according to any one of the preceding claims, wherein the number of RF signal processing elements and defined regions is below 1000, or between 25 and 500, or between 50 and 100, e.g., 64.

15. The light modulator according to any one of the preceding claims, wherein the electric modulation of the particles' position is electrophoretic modulation of the particles' position.

16. A glazing unit, the glazing unit comprising
- a first pane and a second pane arranged parallel to each other,
- the light modulator according to any one of claim 1-15, the first substrate and the second substrate being arranged in the glazing unit parallel to the first pane and second pane.

17. A glazing unit as in Claim 16, wherein
- the light modulator is arranged between the first pane and the second pane,
- the light modulator is arranged at an exterior side of the glazing unit.

18. The light modulator according to any one of the preceding claims, further comprising a battery charging circuit, having a first input coupled to the combined RF output signal and a second input coupled to a ground reference, the battery charging circuit being configured to convert the combined RF output signal into electrical energy for charging an energy storage device.

19. A substrate as in any one of the preceding claims.

20. A light modulator method (500) for reception and/or transmission of radio frequency signals using a light modulator, the light modulator comprising
- a first substrate (141; 621) and a second substrate (142; 622), arranged parallel to each other in the light modulator, a first driving bus being arranged on the first substrate,
- a plurality of regions being defined on the first substrate, wherein in each region a first electrode is arranged on the first substrate, which first electrode is connected to the first driving bus through a low-pass element, the first electrode of each region of the plurality of regions is connected through a high-pass element to a corresponding RF signal processing element of a plurality of RF signal processing elements, wherein the first electrode is adapted to serve as an antenna,
- an optical layer (143) arranged between the first substrate and second substrate, charged or chargeable particles being in fluidic suspension in the optical layer (143),
the method comprising
- providing (510) a low-frequency driving signal to the first driving bus to control the optical layer, the light modulator being configured to apply the low-frequency driving signal to the first electrodes via the low-pass elements, thereby generating an electric field in the optical layer that induces electric modulation of the particles' position, causing modulation of optical properties of the light modulator,
- reception and/or transmission of radio frequency signals through the plurality of RF signal processing elements.

21. A method (550) of configuring a light modulator, comprising
- providing (560) a light modulator as in any one of Claims 2-4,
- optimizing (570) phase shifts for the plurality of phase shifters of the light modulator to optimize RF reception and/or RF transmission,
- programming (580) the plurality of phase shifters of the light modulator through the computer, setting for each phase shifter the particular phase shift obtained from the optimization.

22. A transitory or non-transitory computer-readable medium encoded with instructions that, when executed by one or more computers, cause the one or more computers to perform the method according to Claim 20 or 21.

## Amended claims

### Amended claims in accordance with Rule 137(2) EPC.

1. A light modulator (100-104) configured for reception and/or transmission of radio frequency signals, the light modulator comprising
- a first substrate (11, 41, 161) and a second substrate (12, 42, 162), arranged parallel to each other in the light modulator, a first driving bus being arranged on the first substrate,
- a plurality of regions being defined on the first substrate, wherein in each region a first electrode is arranged on the first substrate, which first electrode is connected to the first driving bus through a low-pass element (111, 211), the first electrode of each region of the plurality of regions is connected through a high-pass element (121, 221) to a corresponding RF signal processing element of a plurality of RF signal processing elements, wherein the first electrode is adapted to serve as an antenna,
- an optical layer (17, 163) arranged between the first substrate and the second substrate, charged or chargeable particles (30) being in fluidic suspension in the optical layer , the first driving bus being configured to receive a low-frequency driving signal, which is applied to the first electrodes via the low-pass elements, thereby generating an electric field in the optical layer that induces electric modulation of the particles' position, causing modulation of optical properties of the light modulator, wherein
- the light modulator is configured for reception and/or transmission of radio frequency signals through the plurality of RF signal processing elements.

2. The light modulator of Claim 1, wherein the RF signal processing elements are phase shifters (120, 251-255), and wherein
- the light modulator is configured to combine output signals of the plurality of phase shifters into a combined RF output signal (123), and/or wherein a RF input signal (125) is provided to the plurality of phase shifters.

3. The light modulator of Claim 2, wherein each phase shifter (120, 251-255) of the plurality of phase shifters is individually programmable for a particular phase shift and optionally for a particular gain, one or more control lines being arranged on the first substrate (11, 41, 161) connecting to each phase shifter to enable the individual programming.

4. The light modulator of Claim 3, wherein the plurality of phase shifters is programmed to achieve a directional reception and/or transmission corresponding to a specified direction of maximum gain.

5. The light modulator according to any one of Claims 3-4, wherein each of the plurality of phase shifters is configured to provide an adjustable phase shift to an RF signal received from its corresponding first electrode, each phase shifter comprising an input terminal to receive the RF signal, an adjustable phase element configured to modulate the phase of the RF signal in response to a control signal received through the control line, and an output terminal to transmit the RF signal with the adjusted phase shift.

6. The light modulator of Claim 1, wherein the RF signal processing elements each comprise an amplifier (128) and are configured for multiple-input multiple-output (MIMO) operation.

7. The light modulator of Claim 6, wherein each of the plurality of RF signal processing elements is configured to independently receive a respective RF input signal (125) or to generate a respective RF output signal (129.1 - 129.3), the RF input signals or RF output signals being processed independently without analog combining or distribution among the RF signal processing elements.

8. The light modulator according to any one of the preceding claims, wherein
- a second driving bus is arranged on the first substrate,
- in each region a second electrode is arranged on the first substrate (11, 41, 161), which second electrode is connected to the second driving bus through a low-pass element (111, 211), the second electrode of each region of the plurality of regions is connected through a high-pass element (121, 221) to the corresponding RF signal processing element of the plurality of RF signal processing elements, wherein the second electrode is adapted to serve as an antenna, the first electrode and the second electrode being interdigitated.

9. The light modulator according to any one of the preceding claims, wherein the low-pass elements comprise an inductor and/or the high-pass elements comprise a capacitor.

10. The light modulator according to any one of the preceding claims, wherein
- the low-frequency driving signal comprises a low-frequency AC voltage signal, or
- the low-frequency driving signal comprises a low-frequency AC current signal, wherein a further bus is arranged on the first substrate (11, 41, 161) to provide a return path for the current signal, and wherein each first electrode is connected to the further bus through a low-pass element (111, 211).

11. The light modulator according to any one of the preceding claims, wherein
- a first driving bus is arranged on the second substrate (12, 42, 162),
- a first electrode is arranged on the second substrate, which first electrode is connected to the first driving bus through a low-pass element (111, 211),
- the first electrode is connected through a high-pass element (121, 221) to form a ground signal (124).

12. The light modulator according to any one of the preceding claims, wherein
- the low-pass elements (111, 211) are configured with cutoff frequencies in a range from 10 Hz to 10 kHz to pass the low-frequency driving signal for control in the optical layer (17, 163), and/or
- the high-pass elements (121, 221) are configured with cutoff frequencies in a range from 100 kHz to 10 MHz to block the low-frequency driving signal while passing the high-frequency RF signals.

13. The light modulator according to any one of the preceding claims, wherein the first electrodes are applied to the first substrate (11, 41 ,161) using a stepped patterning process, wherein a predefined electrode pattern is repeatedly applied multiple times across the first substrate to form the plurality of regions, each region comprising one or more copies of the predefined electrode pattern.

14. The light modulator according to any one of the preceding claims, wherein the number of RF signal processing elements and defined regions is below 1000, or between 25 and 500, or between 50 and 100, e.g., 64.

15. The light modulator according to any one of the preceding claims, wherein the electric modulation of the particles' position is an electrophoretic modulation of the particles' position.

16. The light modulator according to any of the preceding claims, wherein each region of the plurality of regions is implemented as one or more copies of a building block (110, 210), electrode lines in the one or more building blocks in a region are connected to form the first electrode.

17. The light modulator according to any of the preceding claims, wherein the first electrode of each region of the plurality of regions is connected to the first driving bus through a corresponding low-pass element (111, 211) of a plurality of low-pass elements.

18. The light modulator according to Claim 8, optionally in combination with Claim 17, optionally in combination with any other of the preceding claims, wherein the second electrode of each region of the plurality of regions is connected to the second driving bus through a corresponding low-pass element (111, 211) of a second plurality of low-pass elements.

19. The light modulator according to any of the preceding claims, further comprising a battery charging circuit, having a first input coupled to the combined RF output signal (129.1 - 129.3) and a second input coupled to a ground reference, the battery charging circuit being configured to convert the combined RF output signal into electrical energy for charging an energy storage device.

20. A glazing unit, the glazing unit comprising
- a first pane (165) and a second pane (166) arranged parallel to each other,
- the light modulator according to any one of claim 1-19, the first substrate (11, 41, 161) and the second substrate (12, 42, 162) being arranged in the glazing unit parallel to the first pane and second pane.

21. A glazing unit according to Claim 20, wherein
- the light modulator is arranged between the first pane (165) and the second pane (166), or
- the light modulator is arranged at an exterior side of the glazing unit.

22. A light modulator method (500) for reception and/or transmission of radio frequency signals using a light modulator, the light modulator comprising
- a first substrate (11, 41, 161) and a second substrate (12, 42, 162), arranged parallel to each other in the light modulator, a first driving bus being arranged on the first substrate,
- a plurality of regions being defined on the first substrate, wherein in each region a first electrode is arranged on the first substrate, which first electrode is connected to the first driving bus through a low-pass element (111, 211), the first electrode of each region of the plurality of regions is connected through a high-pass element (121, 221) to a corresponding RF signal processing element of a plurality of RF signal processing elements, wherein the first electrode is adapted to serve as an antenna,
- an optical layer (17, 163) arranged between the first substrate and the second substrate, charged or chargeable particles (30) being in fluidic suspension in the optical layer , the method comprising
- providing (510) a low-frequency driving signal to the first driving bus to control the optical layer, the light modulator being configured to apply the low-frequency driving signal to the first electrodes via the low-pass elements, thereby generating an electric field in the optical layer (17, 163) that induces electric modulation of the particles' position, causing modulation of optical properties of the light modulator,
- reception and/or transmission of radio frequency signals through the plurality of RF signal processing elements.

23. A method (550) of configuring a light modulator, comprising
- providing (560) a light modulator according to any one of Claims 2, 3, 4, or 5,
- optimizing (570) phase shifts for the plurality of phase shifters of the light modulator to optimize RF reception and/or RF transmission,
- programming (580) the plurality of phase shifters of the light modulator, setting for each phase shifter (120, 251-255) the particular phase shift obtained from the optimization.

24. A transitory or non-transitory computer-readable medium encoded with instructions that, when executed by one or more computers, cause the one or more computers to perform the method according to Claim 22 or 23.
